# EUROPÄISCHE PATENTSCHRIFT

(11) **EP 1 247 837 B1**
(45) Veröffentlichungstag und Bekanntmachung des Hinweises auf die Patenterteilung: **14.05.2008**
(21) Anmeldenummer: 02007449.8
(22) Anmeldetag: 30.03.2002
(51) Int. Cl.: C08L 61/20, C08L 61/28, C08G 12/32

(54) **Modifizierte Aminoplaste für Halbzeuge und Formstoffe verbesserter Elastizität**
Modified amino resins for semifinished products and molded bodies having an improved resilience
Résines d'aminoplaste modifiées pour produits semi-finis et corps moulés ayant une élasticité ameliorée

(30) Priorität: 07.04.2001 DE 10117544
(43) Veröffentlichungstag der Anmeldung: 09.10.2002
(73) Patentinhaber: AMI Agrolinz Melamine International GmbH, 4020 Linz (AT)
(72) Erfinder: Rätzsch, Manfred, Prof. Dr., 4062 Wilhering (AT); Pfeiffer, Steffen, Dr., 4030 Linz (AT); Arnold, Manfred, Prof. Dr., 06667 Leissling (DE)
(74) Vertreter: Gross, Felix

(56) Entgegenhaltungen:
- EP-A- 0 447 999
- WO-A-02/00429
- GB-A- 1 247 230
- GB-A- 1 296 095
- US-A- 2 813 844
- US-A- 4 940 491
- PATENT ABSTRACTS OF JAPAN vol. 015, no. 357 (C-0866), 10. September 1991 (1991-09-10) & JP 03 140356 A (NIPPON SHOKUBAI KAGAKU KOGYO CO LTD), 14. Juni 1991 (1991-06-14)

## Beschreibung

Die Erfindung betrifft modifizierte Aminoplaste zur Herstellung von Halbzeugen und Formstoffen verbesserter Elastizität nach dem Oberbegriff des Anspruchs 1, Verfahren zu deren Herstellung nach den Ansprüchen 5-8 und deren Verwendung nach Anspruch 11.

Melamin-Formladehyd-Polymere können auf den unterschiedlichsten Gebieten Verwendung finden. So ist aus der US 4,940,491 die Verwendung von Melamin-Formaldehyd-Polymeren mit einem Molekulargewicht von 2 500 bis 4 000 in Kombination mit einem Polyvinylalkohol und einem Styren-Acrylat-Copolymer in Form eines Lack-Sprays bekannt, wobei die Mischung als wässrige Lösung zu Reinigungszwecken benutzt wird.

Halbzeuge und Formstoffe aus Aminoplasten wie Melaminharzen, Harnstoffharzen oder Cyanamidharzen besitzen eine hohe Steifigkeit und Wärmeformbeständigkeit (Ullmanns Encyclopedia of Industrial Chemistry, 4. Auflage, Vol. A2, 115-141). Von Nachteil ist jedoch die geringe Elastizität, d.h. die geringe Bruchdehnung, Schlagzähigkeit und Kerbschlagzähigkeit sowie die zu geringe Resistenz gegenüber Rissbildung bei der thermischen Nachverformung der Halbzeuge und Formstoffe.

Bekannte Verfahren zur Herstellung von Aminoplasten für Halbzeuge und Formstoffe verbesserter Elastizität sind die Einarbeitung von Polyacrylaten [JP 11 209 664, C.A.131:145791] oder Elastomeren [JP 61 042 558; C.A.105:44119] in Melamin-Formaldehyd-Harze oder von Acrylnitril-Butadien-Kautschuken in Harnstoff-FormaldehydHarze [Suspene, L., Polym. Mater. Sci. Eng. 63(1990), 572].

Bei der Einarbeitung hochmolekularer Thermoplaste oder Elaste in Aminoplaste ist eine günstige Verteilung der Mischungskomponenten nur schwierig zu erreichen, so dass die Verbesserung der Elastizität von Halbzeugen und Formstoffen aus Aminoplasten begrenzt oder mit einem deutlichem Abfall der Steifigkeit und Wärmeformbeständigkeit verbunden ist.

Die GB 1247230 beschreibt eine Harz-Zusammensetzung herstellbar aus a) einem Triazin-Aldehyd-Kondensationsprodukt, und b) einem monomeren Acrylsäureester mit mindestens einer Hydroxygruppe und/oder einem Polymer daraus mit einem durchschnittlichen Molekulargewicht unter 50 000. Die aus dieser Zusammensetzung hergestellten Laminate weisen jedoch eine nur begrenzte Flexibilität (postform ability), Bruchdehnung, Schlagzähigkeit und Kerbschlagzähigkeit auf.

Aufgabe der vorliegenden Erfindung sind daher modifizierte Aminoplaste zur Herstellung von Halbzeugen und Formstoffen, die eine verbesserte Elastizität, d.h. eine verbesserte Bruchdehnung, Schlagzähigkeit und Kerbschlagzähigkeit sowie bei der thermischen Nachverformung der Produkte eine verbesserte Resistenz gegenüber Rissbildung besitzen, ohne dass ein deutlichem Abfall der Steifigkeit und Wärmeformbeständigkeit erfolgt.

Die erfindungsgemäße Aufgabe wurde durch modifizierte Aminoplaste aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsitane, Vinylpyridin, Vinyloxazolin, Isopropenyloxazolin und/oder Vinylpyrrolidon in Gegenwart der Aminoplastvorkondensate A) hergestellt worden sind,
   oder aus A), B) und,
C) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷.
   gelöst, wobei die thermoplastischen Polymere in die Aminoplastvorkondensate feindispers als Partikel mit einem mittleren Partikeldurchmesser von 5 bis 500 m eingelagert sind oder ein homogenes Blend mit den Aminoplastvorkondensaten bilden.

Bevorzugt bestehen die modifizierten Aminoplaste aus 75 bis 90 Masse% Aminoplastvorkondensaten und 25 bis 10 Masse% thermoplastischen Polymeren, wobei die thermoplastischen Polymere gegebenenfalls partiell mit den Aminoplastvorkondensaten chemisch verknüpft sind.

Als Melaminharze werden Polykondensate aus Melamin bzw. Melaminderivaten und C₁C₁₀-Aldehyden mit einem Molverhältnis Melamin bzw. Melaminderivat / C₁-C₁₀-Aldehyden 1 : 1 bis 1: 6 sowie deren partielle Veretherungsprodukte mit C₁-C₁₀-Alkoholen bevorzugt, wobei die Melaminderivate insbesondere durch Hydroxy-C₁-C₁₀-alkylgruppen, Hydroxy-C₁-C₄-alkyl(oxa-C₂-C₄-alkyl)gruppen und/oder durch Amino-C₁-C₁₂-alkylgruppen substituierte Melamine, Diaminomethyltriazine und/oder Diaminophenyltriazine, besonders bevorzugt 2-(2-Hydroxyethylamino)-4,6-diamino-1,3,5-triazin, 2-(5-Hydroxy-3-oxapentylamino)-4,6-diamino-1,3,5-triazin und/oder 2,4,6-Tris(6-aminohexylamino)-1,3,5-triazin, Ammelin, Ammelid, Melem, Melon, Melam, Benzoguanamin, Acetoguanamin, Tetramethoxymethy-Ibenzoguanamin, Caprinoguanamin und/oder Butyroguanamin sind, und die C₁-C₁₀-Aldehyde bevorzugt Formaldehyd, Acetaldehyd, Trimethylolacetaldehyd, Acrolein, furfurol, Glyoxal und/oder Glutaraldehyd, besonders bevorzugt Formaldehyd, sind.

Die Melaminharze können ebenfalls 0,1 bis 10 Masse%, bezogen auf die Summe von Melamin und Melaminderivaten, eingebaute Phenole und/oder Harnstoff enthalten. Als Phenolkomponenten sind dabei Phenol, C₁-C₉-Alkylphenole, Hydroxyphenole und/oder Bisphenole geeignet.

Beispiele für partielle Veretherungsprodukte von Melaminharzen mit C₁-C₁₀-Alkoholen sind methylierte oder butylierte Melaminharze.

Beispiele für die in den modifizierten Aminoplasten gegebenenfalls enthaltenen Harnstoffharze sind neben Hamstoff-Formaldehyd-Harzen ebenfalls Mischkondensate mit Phenolen, Säureamiden oder Sulfonsäureamiden.

Beispiele für die in den modifizierten Aminoplasten gegebenenfalls enthaltenen Sulfonamidharze sind Sulfonamidharze aus p-Toluolsulfonamid und Formaldehyd.

Beispiele für die in den modifizierten Aminoplasten gegebenenfalls enthaltenen Guanaminharze sind Harze, die als Guanaminkomponente Benzoguanamin, Acetoguanamin, Tetramethoxymethylbenzoguanamin, Caprinoguanamin und/oder Butyroguanamin enthalten.

Beispiele für die in den modifizierten Aminoplasten gegebenenfalls enthaltenen Anilinharze sind Anilinharze, die als aromatische Diamine neben Anilin ebenfalls Toluidin und/oder Xylidine enthalten können.

Beispiele für die C₈-C₂₀-Vinylaromaten - Monomere, die in der thermoplastischen Polymerkomponente der modifizierten Aminoplaste enthalten sein können, sind Styren, α-Methylstyren, Dimethylstyren, Isopropenylstyren, p-Methylstyren und Vinylbiphenyl.

Beispiele für die C₄-C₂₁-Acrylsäureester - Monomere, die in der thermoplastischen Polymerkomponente der modifizierten Aminoplaste enthalten sein können, sind Methylacrylat, Benzylacrylat und Stearylacrylat.

Beispiele für die C₅-C₂₂-Methacrylsäureester - Monomere, die in der thermoplastischen Polymer - Komponente der modifizierten Aminoplaste enthalten sein können, sind Methylmethacrylat, n-Butylmethacrylat, tert. Butylmethacrylat, Benzylmethacrylat und Stearylmethacrylat.

Beispiele für die Amino-C₁-C₈-alkyl(meth)acrylat - Monomere, die in der thermoplastischen Polymerkomponente der modifizierten Aminoplaste enthalten sein können, sind Diethylaminoethylacrylat, Dimethylaminoisobutylacrylat und Dimethylaminoethylhexylacrylat.

Beispiele für die Hydroxy-C₁-C₈-alkyl(meth)acrytat - Monomere, die in der thermoplastischen Polymerkomponente der modifizierten Aminoplaste enthalten sein können, sind Hydroxyethylmethacrylat, Hydroxyisobutylmethacrylat und Hydroxyethylhexylmethacrylat.

Beispiele für C₄-C₁₀-Fluor(meth)acrylate, die in der thermoplastischen Polymer - Komponente der modifizierten Aminoplaste enthalten sein können, sind 2-Fluorethylacrylat und N-(p-fluorphenyl)methacrylamid.

Beispiele für C₄-C₂₀-Dicarbonsäureanhydrid - Monomere, die in der thermoplastischen Polymerkomponente der modifizierten Aminoplaste enthalten sein können, sind Allylsuccinsäureanhydrid, Bicycloheptendicarbonsäureanhydrid, Bicyclooctendicarbonsäureanhydrid, Carbomethoxymaleinsäureanhydrid, Citraconsäureanhydrid, Cyclohexendicarbonsäureanhydrid, Dodecencylbemsteinsäureanhydrid, Glutaconsäureanhydrid, Itaconsäureanhydrid, Maleinsäureanhydrid, Mesaconsäureanhydrid, Methylbicycloheptendicarbonsäureanhydrid, Methylcydohexendicarbonsäureanhydrid und Norbomendicarbonsäureanhydrid, bevorzugt werden Maleinsäureanhydrid und/oder Itakonsäureanhydrid.

Beispiele für die C₃-C₂₀-Vinylester - Monomere, die in der thermoplastischen Polymerkomponente der modifizierten Aminoplaste enthalten sein können, sind Vinylformiat, Vinylacetat, Vinylpropionat, Vinylbutyrat, Vinylethylhexanoat und Vinylstearat.

Beispiele für die C₃-C₂₀-Vinylether - Monomere, die in der thermoplastischen Polymerkomponente der modifizierten Aminoplaste enthalten sein können, sind Methylvinylether, Isobutylvinylether, Hydroxyethylvinylether, Hydroxybutylvinylether und Stearylvinylether.

Beispiele für die C₄-C₁₀-Dien - Monomere, die in der thermoplastischen Polymerkomponente der modifizierten Aminoplaste enthalten sein können, sind Butadien, Isopren und Dimethylbutadien.

Beispiele für die C₅-C₁₄-Vinyisilan - Monomere, die in der thermoplastischen Polymerkomponente der modifizierten Aminoplaste enthalten sein können, sind Vinyltriethoxysilan, Vinyltriisopropoxysilan, Vinyltrimethoxysilan und Aminoethyldiethoxyvinylsilan.

Beispiele für die C₆-C₁₅-Acrylatsilan - Monomere, die in der thermoplastischen Polymerkomponente der modifizierten Aminoplaste enthalten sein können, sind Methacryloxypropyltrimethoxysilan, Methacryloxypropylmethyldiethoxysilan, Methacryloxypropyltriethoxysilan und Methacryloxypropyltrimethoxysilan.

Bevorzugt werden als thermoplastische Polymere Ethylacrylat-Hydroxyethylmethacrylat-Copolymere mit einem Molverhältnis Ethylacrylat / Hydroxyethylmethacrylat 80 : 20 bis 95 : 5.

Beispiele für Polyetheracrylate, die in der Polymerkomponente der modifizierten Aminoplaste enthalten sein können, sind Acrylsäureester von Polyethylenoxid oder Polypropylenoxid.

Beispiele für Polyurethanacrylate, die in der Polymerkomponente der modifizierten Aminoplaste enthalten sein können, sind Acrylsäure-modifizierte Polyurethane auf Basis Toluylendiisocyanat, Hexamethylendiisocyanat und/oder Diphenylmethandiisocyanat als Diisocyanat-Komponenten und Butandiol, Hexandiol, Polyethylenoxid und/oder Polypropylenoxid als Diolkomponenten.

Beispiele für Polysiloxanacrylate, die in der Polymerkomponente der modifizierten Aminoplaste enthalten sein können, sind Siloxan-Acrylat-Blockcopolymere, die durch Polymerisation von Methylmethacrylat, Butylacrylat, Methacrylsäure und Hydroxyethylacrylat in Gegenwart Azo-Gruppen enthaltender Polysiloxane hergestellt werden können.

Beispiele für Polyester, die in der Polymerkomponente der modifizierten Aminoplaste enthalten sein können, sind Polyester auf Basis Maleinsäureanhydrid, Fumarsäure, Phthalsäure, Isophthalsäure und Adipinsäure als Säurekomponenten und Ethylenglycol, Butandiol, Hexandiol, Ethylhexandiol, Trimethylolpropan und Neopentylglycol als Polyalkohol-Komponenten.

Eine partielle Verknüpfung der thermoplastischen Polymere mit den Aminoplastvorkondensaten über chemische Bindungen kann erzielt werden, wenn die Polymere reaktive Gruppen wie Carboxy-, Hydroxy- oder Epoxygruppen enthalten, die mit den Aminogruppen der Aminoplastvorkondensate koppeln, oder wenn bei der Herstellung der modifizierten Aminoplaste eine radikalische Pfropfung der eingesetzten Monomere auf die Aminoplast-Vorkondensate erfolgt. Hohe Ausbeuten an Verknüpfungen der thermoplastischen Polymere mit den Aminoplastvorkondensaten über chemische Bindungen werden erzielt, wenn bei der Herstellung der modifizierten Aminoplaste als thermisch zerfallende Radikalbildner Peroxide und/oder Hydroperoxide von Melaminderivaten eingesetzt werden.

Erfindungsgemäss kann die Herstellung der modifizierten Aminoplaste durch radikalische Polymerisation ethylenisch ungesättigter Monomerer in Gegenwart von Aminoplastvorkondensaten nach vier Verfahrensvarianten, d.h. in flüssiger Phase (Einstufen-Flüssigphasenverfahren und Zweistufen-Flüssigphasenverfahren), in fester Phase (Festphasenmodifizierungsverfahren) und in der Schmelze (Schmelzemodifizierungsverfahren) erfolgen.

Beim Einstufen-Flüssigphasenverfahren zur Herstellung modifizierter Aminoplaste für die Verarbeitung zu Halbzeugen und Formstoffen verbesserter Elastizität, bei dem die modifizierten Aminoplaste erfindungsgemäß aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate. Hydroxy-C₁-C₈-alkyl(meth)acrylate, C₄-C₁₀-Fluor(meth)acrylate, ethylenisch ungesättigte C₄-C₂₀-Dicarbonsäureanhydride. C₃-C₂₀-Vinylester, C₃-C₂₀-Vinylether, C₄-C₁₀-Diene, C₅-C₁₄-Vinylsilane, C₆-C₁₅-Acrytatsiiane, Vinylpyridin, Vinyloxazolin, Isopropenyloxazolin und/oder Vinylpyrrolidon in Gegenwart der Aminoplastvorkondensate A) hergestellt werden,
   oder aus A), B) und,
C) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
bestehen, werden in Rührreaktoren zu
a) Lösungen, Emulsionen oder Dispersionen von Aminoplastvorkondensaten in Wasser oder in Wasser-C₁-C₃-Alkohol-Mischungen 80 : 20 bis 40 : 60 mit einem Feststoffgehalt von 30 bis 75 Masse%,
b) Monomere vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon, und/oder
c) Lösungen, Dispersionen oder Emulsionen mit einem Feststoffgehalt von 15 bis 70 Masse% an Polymeren vom Typ Polyetheracrylate, Polyurethanacrylate, Polysiloxanacrylate und/oder Polyester mit Molmassen-Gewichtsmitteln von 1 x 10³ bis 5 x10⁷, und
d) thermisch zerfallende Radikalbildner mit Halbwertszeiten von 10 s bis 50 min bei Temperaturen von 50 bis 95°C oder radikalbildende Redoxsysteme,
dosiert, wobei das Verhältnis Aminoplastvorkondensat / Monomer und/oder Polymere vom Typ Polyetheracrylate, Polyurethanacrylate, Polysiloxanacrylate und/oder Polyester 50 : 50 bis 95 : 5 und das Verhältnis Radikalbildner / Monomer und/oder Polymere vom Typ Polyetheracrylate, Polyurethanacrylate, Polysiloxanacrylate und/oder Polyester 0,02 99,98 bis 5 : 95 beträgt, und die Reaktionsmischung wird bei 10 bis 150°C, einer Verweilzeit von 10 bis 120 min und einem Druck von 1 bis 12 bar umgesetzt, gegebenenfalls zur Abtrennung nicht umgesetzter Monomeranteile einer Entgasung bei 0,1 bis 0,8 bar bei 20 bis 80°C und einer Verweilzeit von 10 bis 50 min unterzogen, und entweder zur Verarbeitung aus Lösung auf Raumtemperatur abgekühlt oder durch Sprühtrocknung getrocknet.

Beim Zweistufen-Flüssigphasenverfahren zur Herstellung modifizierte Aminoplaste für die Verarbeitung zu Halbzeugen und Formstoffen verbesserter Elastizität, wobei die modifizierten Aminoplaste erfindungsgemäß aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vnylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon in Gegenwart der Aminoplastvorkondensate A) hergestellt werden,
   oder aus A), B) und,
C) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
bestehen, werden in der ersten Verfahrensstufe in Rührreaktoren Lösungen, Emulsionen oder Dispersionen aus
a) mehrfunktionellen C₁-C₃₀-Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze,
b) C₁-C₁₀-Aldehyden,
c) Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl-(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon, und/oder
d) Polymeren vom Typ Polyetheracrylate, Polyurethanacrylate, Polysiloxanacrylate und/ oder Polyester mit Molmassen-Gewichtsmitteln von 1 x 10³ bis 5 x 10⁷,
   in Wasser oder in Wasser-C₁-C₈-Alkohol-Mischungen 80 : 20 bis 40 : 60, im schwach alkalischem Medium bei pH 8,2 bis pH 9,5, einer Reaktionstemperatur von 50 bis 95°C, einer Verweilzeit von 20 bis 90 min und bei einem Druck von 1 bis 8 bar umgesetzt, wobei das Verhältnis mehrfunktionelle C₁-C₃₀ Aminoverbindungen/C₁-C₁₀-Aldehyde 1 : 1 bis 1 : 6, das Verhältnis der Summe C₁-C₃₀ Aminoverbindungen + C₁-C₁₀-Aldehyde / Monomer und/oder Polymere vom Typ Polyetheracrylate, Polyurethanacrylate, Polysiloxanacrylate und/oder Polyester 50 : 50 bis 95 : 5 und der Gehalt von C₁-C₃₀ Aminoverbindungen + C₁-C₁₀-Aldehyde im Reaktionsmedium Wasser bzw. Wasser-C₁-C₈-Alkohol-Mischungen von 30 bis 75 Masse% beträgt, und nachfolgend werden
   in der zweiten Verfahrensstufe nach Neutralisation zu den Lösungen, Emulsionen oder Dispersionen der gebildeten Aminoplastvorkondensate sowie Monomeren und/oder Polymeren vom Typ Polyetheracrylate, Polyurethanacrylate, Polysiloxanacrylate und/oder Polyester,
e) thermisch zerfallende Radikalbildner mit Halbwertszeiten von 10 s bis 50 min im Temperaturbereich von 50 bis 95°C oder radikalbildende Redoxsysteme,
dosiert, wobei das Verhältnis Radikalbildner/Monomer und/oder Polymere vom Typ Polyetheracrylate, Polyurethanacrylate, Polysiloxanacrylate und/oder Polyester 0,05 : 99,95 bis 5 : 95 beträgt, und die Reaktionsmischung wird bei 10 bis 120°C, einer Verweilzeit von 10 bis 120 min und einem Druck von 1 bis 12 bar umgesetzt, gegebenenfalls zur Abtrennung nicht umgesetzter Monomeranteile einer Entgasung bei 0,1 bis 0,8 bar bei 20 bis 80°C und einer Verweilzeit von 10 bis 50 min unterzogen, und entweder zur Verarbeitung aus Lösung auf Raumtemperatur abgekühlt oder durch Sprühtrocknung getrocknet.

Beispiele für geeignete Dispergatoren, die als Schutzkolloide bei den Flüssigphasenverfahren zur Herstellung modifizierter Aminoplaste eingesetzt werden können, sind Polyvinylalkohol, Polymethacrylamid, Polyvinylpyrrolidon, Polymethylvinylether, Polyethylenoxid, Methylcellulose, Ethylcellulose, Hydroxyethylcellulose und/oder Carboxymethylcellulose.

Beispiele für geeignete Redoxsysteme, die bei den Flüssigphasenverfahren zur Herstellung modifizierter Aminoplaste eingesetzt werden können, sind Kaliumperoxidisulfat/Natriumhydrogensutfit, tert.Butylhydroperoxid/Eisen-II-sulfat und Wasserstoffperoxid/Eisen-IIsulfat

Bei den Flüssigphasenverfahren erfolgt die radikalische Initiierung der Polymerisation der ethylenisch ungesättigten Monomeren in Gegenwart der Aminoplastvorkondensate bei Einsatz von thermisch zerfallenden Radikalbildnem bevorzugt im Temperaturbereich von 70 bis 85°C und bei Einsatz radikalbildender Redoxsysteme bevorzugt im Temperaturbereich von 15 bis 30°C.

Bei den Flüssigphasenverfahren kann die radikalische Initiierung der Polymerisation der ethylenisch ungesättigten Monomeren in Gegenwart der Aminoplastvorkondensate ebenfalls durch ionisierende Strahlung wie UV-Strahlung, Gammastrahlung oder beschleunigte Elektronen erfolgen.

Beim Festphasenmodifizierungsverfahren zur Herstellung modifizierter Aminoplaste für die Verarbeitung zu Halbzeugen und Formstoffen verbesserter Elastizität, bei dem die modifizierten Aminoplaste erfindungsgemäß aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicawonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon in Gegenwart der Aminoplastvorkondensate A) hergestellt werden,
bestehen, werden in kontinuierlichen Mischern in der ersten Prozessstufe
a) Aminoplastvorkondensat-Festharze, die gegebenenfalls
b) thermisch zerfallende Radikalbildner mit Halbwertszeiten von 10 s bis 20 min bei Temperaturen von 50 bis 95°C enthalten, einer Sorption von
c) Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀.

Diene, C₅-C₁₄-Vinylsilane, C₆-C₁₅-Acrylatsilane, Vinylpyridin, Vinyloxazolin, Isopropenyloxazolin und/ oder Vinylpyrrolidon, und b) gegebenenfalls thermisch zerfallenden Radikalbildnem mit Halbwertszeiten von 10 s bis 20 min bei Temperaturen von 50 bis 95°C
bei einer Sorptionstemperatur von 20 bis 60°C und einer Verweilzeit von 3 min bis 40 min unterzogen, wobei das Verhältnis Aminoplastvorkondensat/Monomer 50 : 50 bis 95 : 5 und das Verhältnis Radikalbildner/Monomer 0,05: 99,95 bis 5 : 95 beträgt,
und nachfolgend wird in der zweiten Prozessstufe die Reaktionsmischung, die Aminoplastvorkondensat, Monomer und thermisch zerfallende Radikalbildner enthält, bei 50 bis 120°C, einer Verweilzeit von 5 bis 40 min und einem Druck von 1 bis 12 bar umgesetzt, und gegebenenfalls zur Abtrennung nicht umgesetzter Monomeranteile einer Entgasung bei 0,1 bis 0,8 bar bei 40 bis 120°C und einer Verweilzeit von 5 bis 40 min unterzogen.

Als kontinuierliche Mischer sind beim Festphasenmodifizierungsverfahren insbesondere kontinuierliche beheizbare Durchflussmischer mit Vacuumentgasung geeignet.

Beim Schmelzemodifizierungsverfahren zur Herstellung modifizierter Aminoplaste für die Verarbeitung zu Halbzeugen und Formstoffen verbesserter Elastizität, wobei die modifizierten Aminoplaste erfindungsgemäß aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon in Gegenwart der Aminoplastvorkondensate A) hergestellt werden,
   oder aus A). B) und,
C) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
bestehen, werden in kontinuierlichen Knetem Mischungen aus
a) Aminoplastvorkondensat-Festharzen,
b) Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhyddde, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon, und/oder
c) Lösungen, Dispersionen oder Emulsionen mit einem Feststoffgehalt von 15 bis 70 Masse% an Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
d) thermisch zerfallende Radikalbildnem mit Halbwertszeiten von 20 s bis 3 min bei Temperaturen von 150 bis 200°C, und
e) gegebenenfalls 5 bis 30 Masse%, bezogen auf die eingesetzten Aminoplastvorkondensate, C₂-C₈ Alkoholen,
in der Schmelze bei Temperaturen von 170 bis 220°C und Verweilzeiten von 2 bis 12 min geknetet, gegebenenfalls vacuumentgast, ausgetragen und granuliert, oder unter Zusatz von üblichen Härtern durch Formwerkzeuge ausgetragen und zu Halbzeugen bzw. Formstoffen ausgeformt, wobei das Verhältnis Aminoplastvorkondensat / Monomer und/oder Polymere vom Typ Polyetheracrylate, Polyurethanacrylate, Polysiloxanacrylate und/oder Polyester 50 : 50 bis 95 : 5, und das Verhältnis Radikalbildner/Monomer und/oder Polymere vom Typ Polyetheracrylate, Polyurethanacrylate, Polysiloxanacrylate und/oder Polyester 0,05 : 99,95 bis 5 : 95 beträgt.

Als kontinuierliche Kneter werden beim Schmelzemodifizierungsverfahren Einschnecken- oder Doppelschneckenextruder mit L/D 25 - 40 mit Vacuumentgasung bevorzugt.

Beispiele für geeignete C₂-C₈ Alkohole, die beim Schmelzemodifizierungsverfahren zur Herstellung modifizierter Aminoplaste eingesetzt werden können, sind Ethanol und Ethylhexylalkohol.

Beispiele für übliche latente Härter, die beim Schmelzemodifizierungsverfahren zur Herstellung modifizierter Aminoplaste bei direkter Ausformung der modifizierten Aminoplaste zu Halbzeugen oder Formstoffen zugesetzt werden können, sind Salze, die bei erhöhter Temperatur Säurekomponenten abspalten, Ester, die bei erhöhter Temperatur unter Freisetzung von Säurekomponenten hydrolysieren, und/oder Thioharnstoff. Geeignete Salze sind Ammoniumsalze, insbesondere Ammoniumperoxidisulfat, Ammoniumphosphat, Ammoniumsulfat, Ammoniumchlorid, Ammoniumoxalat und/oder Ammoniumrhodanid; C₁-C₄-Alkylammoniumsalze von Carbonsäuren, insbesondere Methylammoniumphthalat, Methylammoniummaleinat und/oder das Methylaminsalz der Naphthalinsulfonsäure. Geeignete Ester sind Ester der Phosphorsäure, phosphorigen Säure, Oxalsäure und/oder Phthalsäure, insbesondere Diethylphosphat, Oxalsäuredimethylester und/oder Phthalsäuredimethylester.

Als thermisch zerfallende Radikalbildner werden bei den erfindungsgemässen Verfahren zur Herstellung modifizierter Aminoplaste für die Verarbeitung zu Halbzeugen und Formstoffen verbesserter Elastizität bevorzugt Peroxide bzw. Hydroperoxide von Melaminderivaten sowie Acylperoxide, Alkylperoxide, Hydroperoxide, Peroxycarbonate, Perester, Ketonperoxide, Peroxiketale und/oder Azoverbindungen eingesetzt.

Bei den Flüssigphasen-Modifizierungsverfahren und dem Festphasen-Modifizierungsverfahren sind als thermisch zerfallende Radikalbildner Peroxide bzw. Hydroperoxide von Melaminderivaten, Acylperoxide, Alkylperoxide, Hydroperoxide, Peroxycarbonate, Perester, Ketonperoxide, Peroxiketale und/oder Azoverbindungen mit Halbwertszeiten von 10 s bis 20 min bei Temperaturen von 50 bis 95°C geeignet. Halbwertszeiten von Radikalbildnem können aus Tabellenwerken wie Brandrup-Immergut, Polymer Handbook, 3rd Edition, II/1, J. Wiley&Sons, New York 1989, entnommen werden.

Beispiele für die bei der Herstellung der erfindungsgemässen modifizierten Aminoplaste bei den Flüssigphasenmodifizierungsverfahren und beim Festphasenmodifizierungsverfahren als thermisch zerfallende Radikalbildner geeigneten Hydroperoxide bzw. Peroxide von Melaminderivaten sind Peroxymethylmelamin, Bis(peroxymethyl)melamin, tert.Butylperoxymethylmelamin oder Bis (tert. butylperoxymethyl)melamin

Hydroperoxide bzw. Peroxide von Melaminderivaten können durch Umsetzung von Methylolmelaminen oder den Methyl- bzw. Ethylethern von Methylolmelaminen mit Wasserstoffperoxid bzw. Alkylhydroperoxiden hergestellt werden.

Beispiele für die bei der Herstellung der erfindungsgemässen modifizierten Aminoplaste bei den Flüssigphasenmodifizierungsverfahren und beim Festphasenmodifizierungsverfahren geeigneten Acylperoxide sind Acetylbenzoylperoxid, Benzoylperoxid, 4-Chlorbenzoylperoxid, Dinitrobenzoylperoxid, 3-Methoxybenzoylperoxid und Methylbenzoylperoxid.

Beispiele für die bei der Herstellung der erfindungsgemässen modifizierten Aminoplaste bei den Flüssigphasenmodifizierungsverfahren und beim Festphasenmodifizierungsverfahren geeigneten Alkylperoxide sind Allyl-tert.butylperoxid, 2,2-Bis-(tert.butylperoxybutan), 1,1-Bis-(tert.butylperoxi)-3,3,5-trimethylcyclohexan, Diisopropylaminomethyl-tert. amylperoxid, Dimethylaminomethyl-tert.amylperoxid, Dietnylaminomethyl-tert.butylper oxid, Dimethylaminomethyl-tert.butylperoxid, 1.1-Di-(tert. amylperoxi)cyclohexan, tert. Amylperoxid, tert.Butylcumylperoxid, tert.Butylperoxid und 1-Hydroxybutyl-n-butylperoxid.

Beispiele für die bei der Herstellung der erfindungsgemässen modifizierten Aminoplaste bei den Flüssigphasenmodifizierungsverfahren und beim Festphasenmodifizierungsverfahren geeigneten Hydroperoxide sind Decalinhydroperoxid und Tetralinhydroperoxid.

Beispiele für die bei der Herstellung der erfindungsgemässen modifizierten Aminoplaste bei den Flüssigphasenmodifizierungsverfahren und beim Festphasenmodifizierungsverfahren geeigneten Perester und Peroxicarbonate sind Butylperacetat, Cumylperacetat, Cumylperpropionat, Cyclohexylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butylbicyclo-(2,2,1)heptanpercarboxylat, tert.Butyl-4-carbomethoxyperbutyrat, tert.Butylcyclobutanpercarboxylat, tert.Butylcyclohexylperoxycarboxylat, tert.Butylcydopentylpercarboxylat, test. Butylcyclopropanpercarboxylat, tert.Butyldimethylpercinnamat, tert.Butyl-2-(2,2-diphenylvinyl)perbenzoat, tert.Butyl-4-methoxyperbenzoat, tert.Butylperbenzoat, tert.Butylcarboxicyclohexan, tert.Butylpemaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylperctotonat, tert. Butylpermaleinsäure, tert.Butylpermethacrylat, tert.Butylperoctoat, tert.Butylperoxyisopropylcarbonat, tert.Butylperisobutyrat, tert Butylperacrylat und tert.Butylperpropionat.

Beispiele für die bei der Herstellung der erfindungsgemässen modifizierten Aminoplaste bei den Flüssigphasenmodifizierungsverfahren und beim Festphasenmodifizierungsverfahren geeigneten Azoverbindungen sind Azodiisobutyronitril und Azo-bis-(dimethylvaleronitril).

Beim Schmelzemodifizierungsverfahren sind als thermisch zerfallende Radikalbildner Peroxide bzw. Hydroperoxide von Melaminderivaten sowie Peroxide und/oder Perester mit Halbwertszeiten von 20 s bis 3 min bei Temperaturen von 160 bis 200°C geeignet.

Beispiele für geeignete thermisch zerfallende Radikalbildner, die beim Schmelzemodifizierungsverfahren zur Herstellung modifizierter Aminoplaste eingesetzt werden können, sind Di-tert.butylperoxid, tert.Butylperbenzoat, Dicumylperoxid, 2,5-Dimethyl-2.5-bis(tert.butylperoxyisopropyl)benzen, 2,5-Dimethyl-2,5-di(tert.butylperoxy)hexan, 2,5-Dimethyl-2,5-di-(tert.butylperoxy)hexyne-3, 2,5-Dimethyl-2,5-di(tert.amylperoxy)hexan, 1,3-Bis-(tert.butylperoxyisopropyl)benzen, tert.Butylperoxybenzoat und tert.Butylperoxypivalat.

Mit besonderem Vorteil werden Gemische dieser Radikalbildner eingesetzt.

Beispiele für geeignete Emulgatoren, die bei der Herstellung der Emulsionen in den erfindungsgemässen Verfahren zur Herstellung modifizierter Aminoplaste eingesetzt werden können, sind anionische Emulgatoren wie Alkalisalze von Fettsäuren oder C₁₀-C₁₈-Sulfonsäuren, kationische Emulgatoren wie Cetylaminhydrochlorid oder Salze von Fettaminen oder nichtionogene Emulgatoren wie Reaktionsprodukte von langkettigen Atkoholen bzw. alkylierten Phenolen mit Ethylenoxid.

Eine bevorzugte Variante des Verfahrens zur Herstellung modifizierter Aminoplaste für die Verarbeitung zu Halbzeugen und Formstoffen verbesserter Elastizität besteht darin, dass in den Emulsionen als Emulgatoren 0,05 bis 3 Masse %, bezogen auf die Summe der Masse der Reaktanden, Copolymere aus C₄-C₂₀-ethylenisch ungesättigten Dicarbonsäureanhydriden und ethylenisch ungesättigten Monomeren mit einem Molverhältnis von 1 : 1 bis 1 : 9 und Molmassen-Gewichtsmitteln von 5000 bis 500000 eingesetzt werden, die mit Ammoniak, C₁-C₁₈-Monoalkylaminen, C₆-C₁₈-aromatischen Monoaminen, C₂-C₁₈-Monoaminoalkoholen, monoaminierten Poly(C₂-C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis Anhydridgruppen Copolymer / Ammoniak, Aminogruppen C₁-C₁₈-Monoalkylamine, C₆-C₁₈-aromatische Monoamine, C₂-C₁₈-Monoaminoalkohole bzw. monoaminiertes Poly-(C₂-C₄-alkylen)oxid und/oder Hydroxygruppen Poly(C₂-C₄-alkylen)oxid 1 : 1 bis 20 : 1 beträgt.

Beispiele für die C₄-C₂₀-Dicarbonsäureanhydrid-Komponenten in den als Emulgatoren eingesetzten modifizierten Copolymeren aus C₄-C₂₀-ethylenisch ungesättigten Dicarbonsäureanhydriden und ethylenisch ungesättigten Monomeren sind BicyGoheptendicarbonsäureanhydrid, Itaconsäureanhydrid, Maleinsäureanhydrid, Methylbicydoheptendicarbonsäureanhydrid und/oder Norbomendicarbonsäureanhydrid.

Beispiele für die Komponente ethylenisch ungesättigte Monomere in den als Emulgatoren eingesetzten modifizierten Copolymeren aus C₄-C₂₀-ethylenisch ungesättigten Dicarbonsäureanhydriden und ethylenisch ungesättigten Monomeren sind
- C₂-C₂₀-Olefine wie Ethylen, Propylen, Buten-1, Isobuten oder Diisobuten;
- C₈-C₂₀-Vinytaromaten wie Styren, α-Methylstyren oder Isopropenylstyren;
- C₄-C₂₁-Acrylsäureester wie Methylacrylat, Benzylacrylat oder Stearylacrylat;
- C₅-C₂₂-Methacrylsäureester wie Methylmethacrylat oder n-Butylmethacrylat;
- C₅-C₁₄-Vinylsilane wie Vinyltriethoxysilan oder Vinyltriisopropoxysilan;
- C₆-C₁₅-Acrylatsilane wie Methacryloxypropyltrimethoxysilan oder Methacryloxypropytmethyldiethoxysilan;
- Amino-C₁-C₈-alkyl(meth)acrylate wie Diethylaminoethylacrylat, Dimethylaminoisobutylacrylat oder Dimethylaminoethylhexylacrylat;
- C₃-C₂₀- Vinylether wie Methylvinylether oder Isobutylvinylether;
- Hydroxy-C₁-C₈-alkyl(meth)acrylate wie Hydroxyethylmethacrylat, Hydroxyisobutylmethacrylat oder Hydroxyethylhexylmethacrylat.

Beispiele für die C₁-C₁₈-Monoalkylamin - Komponenten, die in den als Emulgatoren eingesetzten modifizierten Copolymeren aus ethylenisch ungesättigten C₄-C₂₀-Dicarbonsäureanhydriden und ethylenisch ungesättigten Monomeren als Modifizierungskomponente chemisch verknüpft enthaltenen sein können, sind Methylamin, Butylamin und Octylamin.

Beispiele für die C₆-C₁₈-aromatische Monoamin - Komponenten, die in den als Emulgatoren eingesetzten modifizierten Copolymeren aus ethylenisch ungesättigten C₄-C₂₀-Dicarbonsäureanhydriden und ethylenisch ungesättigten Monomeren als Modifizierungskomponente chemisch verknüpft enthaltenen sein können, sind Anilin, Benzylamin und Naphthylamin.

Beispiele für die C₂-C₁₈-Monoaminoalkohol - Komponenten, die in den als Emulgatoren eingesetzten modifizierten Copolymeren aus ethylenisch ungesättigten C₄-C₂₀-Dicarbonsäureanhydriden und ethylenisch ungesättigten Monomeren als Modifizierungskomponente chemisch verknüpft enthaltenen sein können, sind Ethanolamin, Butanolamin und 1-Amino-12-hydroxydodecan.

Die erfindungsgemässen modifizierten Aminoplaste sind bevorzugt zur Herstellung von Pressteilen, Spritzgussteilen, Profilen, Mikrokapseln, Fasern, geschlossenzelligen oder of fenzelligen Schaumstoffen, Beschichtungen, Laminaten, Schichtpressstoffen oder imprägnierten flächigen Trägermaterialien geeignet, insbesondere für die Herstellung von Faserlaminaten oder von imprägniertem Papier.

Gegenüber Halbzeugen und Formstoffen aus üblichen Aminoplasten besitzen die Halbzeuge und Formstoffe aus den erfindungsgemässen modifizierten Aminoplasten eine verbesserte Elastizität, d.h. eine verbesserte Bruchdehnung, Schlagzähigkeit und Kerbschlagzähigkeit sowie bei der thermischen Nachverformung der Produkte eine verbesserte Resistenz gegenüber Rissbildung, ohne dass ein deutlichem Abfall der Steifigkeit und Wärmeformbeständigkeit erfolgt.

Die Rezepturierung der Formmassen zur Herstellung der Pressteile, Spritzgussteile oder Profile aus den erfindungsgemäss modifizierten Aminoplasten kann insbesondere durch Nassimprägnierung oder Trockenimprägnierung erfolgen. Beim Nassimprägnierungsver fahren wird die Lösung bzw. Dispersion des erfindungsgemässen modifizierten Aminoplastvorkondensats in Knetem mit Füllstoffen wie Zellstoff, Holzmehl, Textilschnitzeln, Textilfasern, Papierschnitzel, Papierfasern, Papierschnitzeln oder Glasfasern und üblichen Zusatzstoffen wie Gleitmitteln, Härtern und Pigmenten homogenisiert und in Trockentrommeln bei Temperaturen unterhalb 80°C getrocknet. Beim Trockenimprägnierungsverfahren werden die modifizierten Aminoplast-Festharz-Pulver bzw. -Granulate mit Füllstoffen wie Holzmehl oder Gesteinsmehl und üblichen Zusatzstoffen wie Härtern, Gleitmitteln und Pigmenten trocken vorgemischt und auf Walzwerken oder kontinuierlichen Knetem homogenisiert. Bevorzugte Verarbeitungstemperaturen liegen bei der Herstellung von Pressteilen bei 140°C bis 180°C und bei der Herstellung von Spritzgussteilen bei 155°C bis 190°C. Die Pressteile, Spritzgussteile oder Profile aus den erfindungsgemässen modifizierten Aminoplasten besitzen eine verbesserte Elastizität, d.h. eine verbesserte Schlagzähigkeit und Kerbschlagzähigkeit.

Die Herstellung von Mikrokapseln erfolgt durch Eintrag der erfindungsgemäss modifizierten Aminoplastvorkondensate in eine emulgatorfreie wässrige Dispersion von festen oder flüssigen Kapselkembildnem, die saure Katalysatoren enthält, und nachfolgende Aushärtung und Sprühtrocknung. Der Einsatz der Kapselkembildner bei der Herstellung der Mikrokapseln wird durch das Anwendungsgebiet der Mikrokapseln bestimmt. Beispiele für feste Kapselkembildner sind feindisperse Fotochemikalien, Herbizide, Pestizide, Agrochemikalien, Pharmaceutica, Pigmente, Farbstoffe, Flammschutzmittel, Katalysatoren, Magnetpartikel und Stabilisatoren. Beispiele für flüssige Kapselkembildner sind Adhesive, Aromastoffe, Parfüme, Tinten und in Wasser dispergierbare Flüssigkeiten wie Öle.

Bei der Herstellung von Melaminharzfasern als Aminoplasthalbzeuge erfolgt die Faserherstellung aus den hochkonzentrierten wässrigen Lösungen der erfindungsgemäss modifizierten Aminoplast-Vorkondensate (Feststoffgehalt 65 bis 85 Masse%) durch Zentrifugenspinnen, Fadenziehen, Extrudieren oder Fibrillierungsprozesse, gegebenenfalls nachfolgende Reckung, und Härtung. Beim Extrusionsverfahren wird die Spinnlösung durch eine Düse in eine auf 170 bis 320°C beheizte Atmosphäre (Luft oder Inertgas) gepresst, um die Entfernung der in der Spinnlösung enthaltenen Lösungsmittel und die Härtung der Faser in möglichst kurzer Zeit zu erreichen. Möglich ist ebenfalls die Herstellung von Fäden aus modifizierten Aminoplastvorkondensaten durch Schmelzspinnen. Die Fasern aus den erfindungsgemässen modifizierten Aminoplasten besitzen eine verbesserte Elastizität, d.h. eine verbesserte Dehnung bei hoher Festigkeit.

Die Herstellung der geschlossenzelligen Schaumstoffe oder geschlossenzelligen geschäumten Profile als Halbzeuge aus den erfindungsgemässen modifizierten AminoplastVorkondensaten erfolgt durch Eintrag der modifizierten Aminoplastvorkondensate in eine emulgatorfreie wässrige Dispersion von flüchtigen Kohlenwasserstoffen und/oder Inertgasen, die saure Katalysatoren enthält, Austrag und nachfolgende Aushärtung.

Die Herstellung von offenzelligen Schaumstoffen aus den modifizierten Aminoplasten erfolgt durch Eintrag der erfindungsgemäss modifizierten Aminoplast-Vorkondensate in eine wässrige Treibmittelemulsion von flüchtigen Kohlenwasserstoffen, Inertgasen und/oder anorganischen Carbonaten, die saure Katalysatoren enthält, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen.
Die geschlossenzelligen bzw. offenzelligen Schaumstoffe aus den erfindungsgemässen modifizierten Aminoplasten besitzen eine verbesserte Elastizität gegenüber Aminoplast-Schaumstoffen aus nichtmodifizierten Aminoplasten.

Bei der Herstellung von Lackharzbeschichtungen als Aminoplasthalbzeuge werden Mischungen aus den erfindungsgemäss modifizierten Aminoplastvorkondensaten unter Zusatz von Pigmenten, Härtern und gegebenenfalls Füllstoffen, Stabilisatoren, Lösungsmitteln sowie Filmbildnem vom Typ Alkydharze, Epoxidharze und/oder Phenolharze rezepturiert, auf Trägermaterialien wie Holz aufgebracht und bei Temperaturen unterhalb 80°C ausgehärtet oder auf metallische Trägermaterialien aufgebracht und bei Temperaturen bis 180°C ausgehärtet.

Bei der Herstellung von Laminaten bzw. Schichtpressstoffen als Aminoplasthalbzeuge werden flächige Trägermaterialien aus organischen oder anorganischen Fasern in Form von Bahnen, Geweben, Matten oder Vliesen mit der wässrigen Lösung bzw. Dispersion des erfindungsgemäss modifizierten Aminoplastvorkondensats, gegebenenfalls unter Zusatz von Schichtsilikaten, beispielsweise in Tränkanlagen imprägniert und in Trockenkanälen bei Temperaturen bis 130°C getrocknet und als Laminat ausgehärtet oder nach Schneiden und gegebenenfalls Einbringen von Zwischenlagen, z.B. aus Holz, Papier oder Pappe, in Mehretagenpressen zu Schichtpressstofftafeln verpresst. Die verbesserte Elastizität von Laminaten ist für die thermische Nachverarbeitbarkeit der Laminate bzw. Schichtpressstoffe von Bedeutung, bei denen bei geringen Biegeradien während der thermischen Nachverarbeitung eine Rissbildung ausgeschlossen werden muss.

Die Erfindung wird durch nachfolgende Beispiele erläutert :

### Beispiel 1

In einem 150 Liter - Rührreaktor werden 17 kg eines Melamin-Festharzes (aus Melamin/Formaldehyd 1 : 1,3, Molmasse 920) bei 75°C unter Rühren in 70 l Wasser gelöst, und in den Rührreaktor nach Temperaturerhöhung auf 85°C innerhalb von 2,5 Std. 7,5 kg einer Mischung aus 10 Mol Styren, 16 Mol Butylmethacrylat, 12 Mol Ethylmethacrylat, 1 Mol Acrylamid und 1 Mol β-Hydroxyethylmethacrylat, die 0,5 Masse% Dibenzoylperoxid enthält, zugesetzt, der Reaktionsansatz weiterhin 1,5 Std. bei 85°C gerührt und auf Raumtemperatur abgekühlt.

Die IR-Analyse ergibt einen Gehalt des modifizierten Melaminharzes an Styren von 6,9 Masse% und an Acrylaten von 21,2 Masse%. Die GPC-Analyse zeigt eine Molmassenverteilung mit Maxima bei M_{w} = 2150 und M_{w} =115000. Der mittlere Durchmesser (Rasterelektronenmikroskopie) der im Melaminharz eingelagerten Partikel an Styren-Acrylat-Copolymer beträgt 70 µm.

### Beispiel 2

In einem 150 Liter - Rührreaktor werden 17 kg eines Melamin-Festharzes (aus Melamin/Formaldehyd 1 : 1,3, Molmasse 920) bei 75°C unter Rühren in 70 I Wasser gelöst, und in den Rührreaktor nach Temperaturerhöhung auf 85°C innerhalb von 2 Std. 6 kg einer wässrigen Emulsion eines Polyesters auf Basis Maleinsäureanhydrid, Phthalsäure, Ethylenglycol, Butandiol und Hexandiol (Molverhältnis 0,8 : 1,2 : 0,7 : 0,8 : 0,5, M_{w} = 18500, Feststoffgehalt 45 Masse%), die 0,5 Masse% Bis(peroxymethyl)melamin als thermisch zerfallenden Radikalbildner und 1,2 Masse% eines Ethanolamin-modifizierten Itaconsäureanhydrid-Styren-Vinylbutyrat-Terpolymers (Molverhältnis 1 : 1,5 : 0,6; Molmassen-Gewichtsmittel Terpolymer rd. 20000, Umsetzungsgrad Anhydridgruppen im Terpolymer 70 Mol%) enthält, zugesetzt, der Reaktionsansatz weiterhin 2 Std. bei 85°C gerührt und auf Raumtemperatur abgekühlt.

Die IR-Analyse ergibt einen Gehalt des modifizierten Melaminharzes an Polyester von 13,7 Masse%. Die GPC-Analyse zeigt eine Molmassenverteilung mit Maxima bei M_{w} = 980 und M_{w} = 19800. Der mittlere Durchmesser (Rasterelektronenmikroskopie) der im Melaminharz eingelagerten Partikel an Polyester beträgt 165 µm.

### Beispiel 3

In einem 150 Liter - Rührreaktor werden 35 kg 30% wässrige Formalinlösung, 8 kg Melamin, 4 kg Benzoguanamin und 2,5 kg Harnstoff und 7,5 kg einer Mischung aus 10 Mol Styren, 16 Mol Butylmethacrylat, 12 Mol Ethylmethacrylat, 1 Mol Acrylamid und 1 Mol β-Hydroxyethylmethacrylat eingetragen, mit Natronlauge auf pH=7,0 eingestellt und bei 80°C unter Rühren innerhalb 65 min kondensiert. Nach Abkühlung auf 45°C wird eine Lösung von 37,5 g Dibenzoylperoxid in 200 ml Aceton zugesetzt, der Reaktionsansatz 3,5 Std. bei 85°C gerührt und auf Raumtemperatur abgekühlt.

Die IR-Analyse ergibt einen Gehalt des modifizierten Aminoplasts an Styren von 6,8 Masse% und an Acrylaten von 21,1 Masse%. Die GPC-Analyse zeigt eine Molmassenverteilung mit Maxima bei M_{w} = 3860 und M_{w} =85000. Eine Fraktionierung und IR-Analyse der niedermolekularen Aminoplastfraktion ergibt einen Anteil an Styren von 0,45 Masse% und an Acrylaten von 1,5 Masse%. Der mittlere Durchmesser (Rasterelektronenmikroskopie) der im Aminoplast eingelagerten Partikel an Styren-Acrylat-Copolymer beträgt 45 µm.

### Beispiel 4

In einem Innenmischer werden 20 kg eines Melamin-Festharzes (aus Melamin/Formaldehyd 1 : 1,3, Molmasse 920) mit 190 g Azodiisobutyronitril in 500 ml Aceton imprägniert.

Die Mischung wird mit 0,3 kg/h in einen kontinuierlichen Durchflussmischer dosiert, der bei 35°C mit einem Styren-Stickstoff-Gemisch gespült wird, bei einer Verweilzeit von 35 min mit Styren beladen, in einen Werner&Pfleiderer - Doppelschneckenextruder ZSK 30, UD = 30, Temperaturprofil 20/35/70/85/115/115/115/115/115°C überführt und nach einer Verweilzeit von 9 min als modifiziertes pulverförmiges Melamin-Festharz ausgetragen.

Die IR-Analyse ergibt einen Gehalt des modifizierten Aminoplasts an Styren von 8,4 Masse%. Der mittlere Durchmesser (Rasterelektronenmikroskopie) der im Melaminharz eingelagerten Partikel an Polystyren beträgt 240 µm.

Die GPC-Analyse zeigt eine Molmassenverteilung mit Maxima bei M_{w} = 2810 und M_{w} =145000.

### Beispiel 5

In einem Innenmischer werden 20 kg eines Melamin-Festharzes (aus Melamin/Formaldehyd 1 : 1,3, Molmasse 920) mit 190 g Azodiisobutyronitril in 500 ml Aceton imprägniert.

Die Mischung wird mit 0,25 kg/h in einen kontinuierlichen Durchflussmischer dosiert, der bei 30°C mit einem Butylacrylat-Methylmethacrylat-Stickstoff-Gemisch (Molverhältnis Butylacrylat/Methylmethacrylat 2 : 1) gespült wird, bei einer Verweilzeit von 25 min mit Butylacrylat und Methylmethacrylat beladen, in einen Werner&Pfleiderer - Doppelschneckenextruder ZSK 30, L/D = 30, Temperaturprofil 20/35/70/85/115/115/115/115/115°C überführt und nach einer Verweilzeit von 8 min als modifiziertes pulverförmiges Melamin-Festharz ausgetragen.

Die IR-Analyse ergibt einen Gehalt des modifizierten Aminoplasts an Butylacrylat-Methylmethacrylat-Copolymer von 7,5 Masse%. Der mittlere Durchmesser (Rasterelektronenmikroskopie) der im Melaminharz eingelagerten Partikel an Butylacrylat-Methylmethacrylat-Copolymer beträgt 190 µm.

Die GPC-Analyse zeigt eine Molmassenverteilung mit Maxima bei M_{w} = 2660 und M_{w} =95000.

### Beispiel 6

In einem 150 Liter - Rührreaktor mit Rückflusskühler und Hochgeschwindigkeitsdispergator werden 35 kg einer 30% wässrigen Aldehydlösung aus Formaldehyd/Furfurol 9:1, 8 kg Melamin, 2 kg Anilin und 2,5 kg 2-(2-Hydroxyethylamino)-4,6-diamino-1,3,5-triazin eingetragen, mit Natronlauge auf pH=7,0 eingestellt und bei 80°C unter Rühren innerhalb 35 min kondensiert und durch Sprühtrocknung getrocknet.

In einem 100 I - Rührreaktor mit Kühler und Bodenablassventil werden zu einer Lösung von 600 ml konzentrierter Salzsäure in 27 l Methanol bei 35°C innerhalb von 75 min 9 kg des hergestellten Aminoplastvorkondensat - Festharzes eingetragen. Nach weiteren 80 min Rühren bei 35°C wird mit methanolischer KOH neutralisiert und nachfolgend im Vacuum bei 300 mbar rd. 21 l Methanol abdestilliert. Der Reaktionsansatz wird mit 6 l Butanol verdünnt, die abgeschiedenen Salze nach 2,5 h über das Bodenablassventil abgezogen und der Reaktionsansatz bei 300 mbar solange eingeengt, bis eine Viscosität von rd. 550 Poise bei 30°C erreicht ist, ausgetragen und gebrochen.

Das verätherte Festharz wird mit 2,2 kg/h in einen Werner&Pfleiderer - Doppelschneckenextruder ZSK 30 mit Vacuumentgasung, L/D= 42, Temperaturprofil 90/125/150/165/165/ 165/165/125/115°C, dosiert. In die Zone 3 des Extruders wird mit 360 g/h ein Gemisch aus 500 g Aceton, 220 g Diisobutylen, 180 g Maleinsäureanhydrid und 6 g tert.Butylperbenzoat dosiert, und die Reaktionsmischung entgast und ausgetragen.

Die IR-Analyse ergibt einen Gehalt des modifizierten Aminoplasts an Diisobutylen von 3,2 Masse% und an Maleinsäureanhydrid von 2,6 Masse%.

Die GPC-Analyse zeigt eine Molmassenverteilung mit Maxima bei M_{w} = 1450 und M_{w} = 76000.

### Beispiel 7

Das verätherte Festharz aus Formaldehyd/Furfurol 9:1, Melamin, Anilin und 2-(2-Hydroxyethylamino)-4,6-diamino-1,3,5-triazin nach Beispiel 6 wird mit 2,4 kg/h in einen Werner&Pfleiderer - Doppelschneckenextruder ZSK 30 mit Vacuumentgasung, L/D= 42, Temperaturprofil 90/125/150/165/165/165/165/125/115°C, dosiert. In die Zone 3 des Extruders wird mit 220 g/h eine wässrige Emulsion eines Polyetheracrylats auf Basis Polypropylenoxid (Feststoffgehalt 62 Masse%, Molmasse 4500, endständige Acrylatgruppen), die als Emulgator 2,5 Masse% eines mit Ammoniak modifizierten Maleinlsobuten-α-Methylstyren- Terpolymers (Molverhältnis 2 : 1 : 1,5; Molmassen-Gewichtsmittel Terpolymer rd. 17200, Umsetzungsgrad Anhydridgruppen im Terpolymer 60 Mol%) und als thermisch zerfallenden Radikalbildner 0,4 Masse% tert.Butylperessigsäure enthält, dosiert, und die Reaktionsmischung entgast und ausgetragen.

Die IR-Analyse ergibt einen Gehalt des modifizierten Aminoplasts an Polypropylenoxid von 5,2 Masse%. Die GPC-Analyse zeigt eine Molmassenverteilung mit Maxima bei M_{w} = 4700 und M_{w}= 11200.

### Beispiel 8

Im beheizbaren Kneter wird eine Mischung aus 3,4 kg gebleichter Sulfitcellulose, 1,1 kg Kreide, 100 g Magnesiumstearat, 50 g Ammoniumperoxidisulfat und 50 g Phthalsäuredüsopropylester mit 10 I der Lösung des modifizierten Melaminharzes nach Beispiel 1 (Gehalt an Styren 6,9 Masse% und an Acrylaten von 21,2 Masse%) imprägniert, homogenisiert, bei 80°C getrocknet, ausgetragen und granuliert und die Formmassenpartikel in einer beheizbaren Presse bei einer Werkzeugtemperatur von 165°C und einem Pressdruck von 250 bar zu 4 mm - Platten 100 x 100 mm verarbeitet.

### Ausgefräste Prüfstäbe besitzen folgende Eigenschaften:

Zugfestigkeit: 27 MPa Biegefestigkeit: 77 MPa Biege-E-Modul: 7300 MPa Schlagzähigkeit: 13,0 kJ/m² Kerbschlagzähigkeit: 4,8 kJ/m²

### Beispiel 9

Zur Herstellung eines Laminats wird mit der Lösung des modifizierten Aminoplasts nach Beispiel 4 (Gehalt an Styren 6,8 Masse% und an Acrylaten 21,1 Masse%), die 0,2% Citronensäure/ Phthalsäure 1 : 1 als Härter enthält, ein Dekorpapier (Flächenmasse 80 g/m²) und ein Kraftpapier als Kernpapier (Flächenmasse 180 g/m²) bei 45°C imprägniert.

Nach Trocknung im Umluftofen bei 140°C auf eine Flüchte von 5,8% besitzt das Dekorpapier einen Harzanteil von 58 Masse% und das Kraftpapier einen Harzanteil von 46 Masse%. Nachfolgend wird eine Schicht des imprägnierten Dekorpapiers mit 3 Lagen Kernpapier in einer Collin-Laborpresse mit einem Druck von 90 bar bei 155°C 120 s zusammengepresst.

Zur Prüfung der Elastizität wurde die Nachverformbarkeit des resultierenden Laminats untersucht. Bei Biegung des Laminats um einen auf 160°C aufgeheizten 3 mm Metalldom trat keine Rissbildung des Laminats auf.

## Patentansprüche

1. Modifizierte Aminoplaste zur Herstellung von Halbzeugen und Formstoffen verbesserter Elastizität, **dadurch gekennzeichnet, dass** die modifizierten Aminoplaste aus
A) 50 bis 95 Masse% Aminoplastvorkondensaten vom Typ Melaminharze, Hamstoffharze, Cyanamidharze, Dicyandiamidharze, Sulfonamidharze, Guanaminharze und/oder Anilinharze mit Molmassen von 500 bis 5000, und
B) 50 bis 5 Masse% thermoplastischen Polymeren mit Molmassen-Gewichtsmitteln von 2 x 10⁴ bis 5 x 10⁷, die durch radikalische Polymerisation von Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl-(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon in Gegenwart der Aminoplastvorkondensate A) hergestellt worden sind,
der aus A), B) und,
C) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
bestehen, wobei die thermoplastischen Polymere in die Aminoplastvorkondensate feindispers als Partikel mit einem mittleren Partikeldurchmesser von 5 bis 500 µm eingelagert sind oder ein homogenes Blend mit den Aminoplastvorkondensaten bilden.

2. Modifizierte Aminoplaste nach Anspruch 1, **dadurch gekennzeichnet, dass** die modifizierten Aminoplaste aus 75 bis 90 Masse% Aminoplastvorkondensaten und 25 bis 10 Masse% thermoplastischen Polymeren bestehen und die thermoplastischen Polymere gegebenenfalls partiell mit den Aminoplastvorkondensaten chemisch verknüpft sind.

3. Modifizierte Aminoplaste nach Anspruch 1, **dadurch gekennzeichnet, dass** die Melaminharze Polykondensate aus Melamin bzw. Melaminderivaten und C₁-C₁₀-Atdehyden mit einem Molverhältnis Melamin bzw. Melaminderivat / C₁-C₁₀-Aldehyden 1 : 1 bis 1:6 sowie deren partielle Veretherungsprodukte mit C₁-C₁₀-Alkoholen sind, wobei die Melaminderivate bevorzugt durch Hydroxy-C₁-C₁₀-alkylgruppen, Hydroxy-C₁-C₄-alkyl(oxa-C₂-C₄-alkyl)gruppen und/oder durch Amino-C₁-C₁₂-alkylgruppen substituierte Melamine, Diaminomethyltriazine und/oder Diaminophenyltnazine sind, besonders bevorzugt 2-(2-Hydroxyethylamino)-4,6-diamino-1,3,5-triazin, 2-(5-Hydroxy-3-oxapentylamino)-4,6-diamino-1,3,5-triazin und/oder 2,4,6-Tris-(6-aminohexylamino)-1,3,5-triazin, Ammelin, Ammelid, Melem, Melon, Melam, Benzoguanamin, Acetoguanamin, Tetramethoxymethylbenzoguanamin, Caprinoguanamin und/oder Butyroguanamin sind, und die C₁-C₁₀-Aldehyde bevorzugt Formaldehyd, Acetaldehyd, Trimethylolacetaldehyd, Acrolein, Furfurol, Glyoxal und/oder Glutaraldehyd, besonders bevorzugt Formaldehyd, sind.

4. Modifizierte Aminoplaste nach Anspruch 1, **dadurch gekennzeichnet, dass** die thermoplastischen Polymere Ethylacrylat-Hydroxyethylmethacrylat-Copolymere mit einem Molverhältnis Ethylacrylat/Hydroxyethylmethacrylat 80 : 20 bis 95 : 5 sind.

5. Verfahren zur Herstellung modifizierter Aminoplaste nach Anspruch 1 für die Verarbeitung zu Halbzeugen und Formstoffen verbesserter Elastizität, **dadurch gekennzeichnet, dass** die modifizierten Aminoplaste nach einem Einstufen-Fiüssigphasenverfahren hergestellt werden, bei dem in Rührreaktoren
a) zu Lösungen, Emulsionen oder Dispersionen von Aminoplastvorkondensaten in Wasser oder in Wasser-C₁-C₈-Alkohol-Mischungen 80 : 20 bis 40: 60 mit einem Feststoffgehalt von 30 bis 75 Masse%,
b) Monomere vom Typ C₈-C₂₀-Vinylaromaten Acrylsäure, Methacrylsäure, Acrylnitril, C₄ C₂₁-Acrylsäureester, C₅-C₂₂-Methacrylsäureester, Amino-C₁-C₃-alkyl(meth)acrylate, Hydroxy-C₁-C₃-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon, und
c) thermisch zerfallende Radikalbildner mit Halbwertszeiten von 10 s bis 50 min bei Temperaturen von 50 bis 95°C oder radikalbildende Redoxsysteme,
oder zur Komponente a) die Komponenten b), c) und
d) Lösungen, Dispersionen oder Emulsionen mit einem Feststoffgehalt von 15 bis 70 Masse% an weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
dosiert werden, wobei das Verhältnis Aminoplastvorkondensat / Monomer oder das Verhältnis Aminoplastvorkondensat / Summe Monomer und weitere thermoplastische Polymere vom Typ Polyetheracrylate, Polyurethanacrylate, Polysiloxanacrylate und/oder Polyester 50: 50 bis 95: 5 und das Verhältnis Radikalbildner / Monomer 0,02 : 99,98 bis 5 : 95 beträgt, und die Reaktionsmischung bei 10 bis 150°C, einer Verweilzeit von 10 bis 120 min und einem Druck von 1 bis 12 bar umgesetzt wird, gegebenenfalls zur Abtrennung nicht umgesetzter Monomeranteile einer Entgasung bei 0,1 bis 0,8 bar bei 20 bis 80°C und einer Verweilzeit von 10 bis 50 min unterzogen wird, und entweder zur Verarbeitung aus Lösung auf Raumtemperatur abgekühlt oder durch Sprühtrocknung getrocknet wird.

6. Verfahren zur Herstellung modifizierter Aminoplaste nach Anspruch 1 für die Verarbeitung zu Halbzeugen und Formstoffen verbesserter Elastizität, **dadurch gekennzeichnet, dass** die modifizierten Aminoplaste nach einem Zweistufen-Flüssigphasenverfahren hergestellt werden, bei dem in der ersten Verfahrensstufe in Rührreaktoren Lösungen, Emulsionen oder Dispersionen aus
a) mehrfunktionellen C₁-C₃₀-Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze,
b) C₁-C₁₀-Aldehyden, und
c) Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₃-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon,
oder aus den Komponenten a), b), c) und
d) weiteren thermoplastischen Polymeren vom Typ Polyetheracrylate, Polyurethanacrylate, Polysiloxanacrylate und/oder Polyester mit Molmassen-Gewichtsmitteln von 1 x 10³ bis 5 x 10⁷,
in Wasser oder in Wasser-C₁-C₃-Alkohol-Mischungen 80 : 20 bis 40 : 60, im schwach alkalischem Medium bei pH 8,2 bis pH 9,5, einer Reaktionstemperatur von 50 bis 95°C, einer Verweilzeit von 20 bis 90 min und bei einem Druck von 1 bis 8 bar umgesetzt werden, wobei das Verhältnis mehrfunktionelle C₁-C₃₀ Aminoverbindungen/C₁-C₁₀-Aldehyde 1:1 bis 1 : 6, das Verhältnis der Summe C₁-C₃₀ Aminoverbindungen + C₁-C₁₀-Aldehyde / Monomer oder das Verhältnis der Summe C₁-C₃₀ Aminoverbindungen + C₁-C₁₀-Aldehyde / Summe Monomer und weitere thermoplastische Polymere vom Typ Polyetheracrylate, Polyurethanacrylate, Polysiloxanacrylate und/oder Polyester 50 : 50 bis 95 : 5, und der Gehalt von C₁-C₃₀ Aminoverbindungen + C₁-C₁₀-Aldehyde im Reaktionsmedium Wasser bzw. Wasser-C₁-C₈-Alkohol-Mischungen von 30 bis 75 Masse% beträgt, und nachfolgend
in der zweiten Verfahrensstufe nach Neutralisation zu den Lösungen, Emulsionen oder Dispersionen der gebildeten Aminoplastvorkondensate und Monomeren oder Monomeren und thermoplastischen Polymeren vom Typ Polyetheracrylate, Polyurethanacrylate, Polysiloxanacrylate und/oder Polyester,
e) thermisch zerfallende Radikalbildner mit Halbwertszeiten von 10 s bis 50 min im Temperaturbereich von 50 bis 95°C oder radikalbildende Redoxsysteme,
dosiert werden, wobei das Verhältnis Radikalbildner/Monomer 0,05 : 99,95 bis 5 : 95 beträgt, und die Reaktionsmischung bei 10 bis 120°C, einer Verweilzeit von 10 bis 120 min und einem Druck von 1 bis 12 bar umgesetzt wird, gegebenenfalls zur Abtrennung nicht umgesetzter Monomeranteile einer Entgasung bei 0,1 bis 0,8 bar bei 20 bis 80°C und einer Verweilzeit von 10 bis 50 min unterzogen wird, und entweder zur Verarbeitung aus Lösung auf Raumtemperatur abgekühlt oder durch Sprühtrocknung getrocknet wird.

7. Verfahren zur Herstellung modifizierter Aminoplaste nach Anspruch 1 für die Verarbeitung zu Halbzeugen und Formstoffen verbesserter Elastizität, **dadurch gekennzeichnet, dass** die modifizierten Aminoplaste, nach einem Festphasen-Modifizierungsverfahren hergestellt werden, bei dem in kontinuierlichen Mischern
in der ersten Prozessstufe
a) Aminoplastvorkondensat-Festharze, die gegebenenfalls
b) thermisch zerfallende Radikalbildner mit Halbwertszeiten von 10 s bis 20 min bei Temperaturen von 50 bis 95°C enthalten, einer Sorption von
c) Monomeren vom Typ C₈-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₈-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin; Vinyloxazolin, Isopropenyloxazolin und/ oder Vinylpyrrolidon, und
d) gegebenenfalls thermisch zerfallenden Radikalbildnem mit Halbwertszeiten von 10 s bis 20 min bei Temperaturen von 50 bis 95°C
bei einer Sorptionstemperatur von 20 bis 60°C und einer Verweilzeit von 3 min bis 40 min unterzogen werden, wobei das Verhältnis Aminoplastvorkondensat/Monomer 50 : 50 bis 95 : 5 und das Verhältnis Radikalbildner/Monomer 0,05 : 99,95 bis 5 : 95 beträgt,
in der zweiten Prozessstufe die Reaktionsmischung, die Aminoplastvorkondensat, Monomer und thermisch zerfallende Radikalbildner enthält, bei 50 bis 120°C, einer Verweilzeit von 5 bis 40 min und einem Druck von 1 bis 12 bar umgesetzt wird, und gegebenenfalls zur Abtrennung nicht umgesetzter Monomeranteile einer Entgasung bei 0,1 bis 0,8 bar bei 40 bis 120°C und einer Verweilzeit von 5 bis 40 min unterzogen wird.

8. Verfahren zur Herstellung modifizierter Aminoplaste nach Anspruch 1 für die Verarbeitung zu Halbzeugen und Formstoffen verbesserter Elastizität, **dadurch gekennzeichnet, dass** die modifizierte Aminoplaste nach einem Schmelzemodifizierungsverfahren hergestellt werden, bei dem in kontinuierlichen Knetem Mischungen aus
a) Aminoplastvorkondensat-Festharzen,
b) Monomeren vom Typ C₃-C₂₀-Vinylaromaten, Acrylsäure, Methacrylsäure, Acrylnitril, C₄-C₂₁-Acrylsäureester, C₅-C₂₂-Methacrylsäureester, Amino-C₁-C₅-alkyl(meth)acrylate, Hydroxy-C₁-C₈-alkyl(meth)acrylate, C₄-C₁₀-Fluor(meth)acrylate, ethylenisch ungesättigte C₄-C₂₀-Dicarbonsäureanhydride, C₃-C₂₀-Vinylester, C₃-C₂₀-Vinylether, C₄-C₁₀-Diene, C₅-C₁₄-Vinylsilane, C₆-C₁₅-Acrylatsilane, Vinylpyridin, Vinyloxazolin, Isopropenyloxazolin und/oder Vinylpyrrolidon, und
c) thermisch zerfallenden Radikalbildnem mit Halbwertszeiten von 20 s bis 3 min bei Temperaturen von 150 bis 200°C,
oder Mischungen aus den Komponenten a), b), c) und
d) Lösungen, Dispersionen oder Emulsionen mit einem Feststoffgehalt von 15 bis 70 Masse% an Polymeren vom Typ Polyetheracrylate, Polyurethanacrylate, Polysiloxanacrylate und/oder Polyester mit Molmassen-Gewichtsmitteln von 1 x 10³ bis 5 x 10⁷, und
e) gegebenenfalls 5 bis 0 Masse%, bezogen auf die eingesetzten Aminoplastvorkondensate, C₂-C₈ Alkoholen,
in der Schmelze bei Temperaturen von 170 bis 220°C und Verweilzeiten von 2 bis 12 min geknetet, vacuumentgast, ausgetragen und granuliert, oder unter Zusatz von üblichen Hartem durch Formwerkzeuge ausgetragen und zu Halbzeugen oder Formstoffen ausgeformt werden, wobei das Verhältnis Aminoplastvorkondensat / Monomer oder das Verthältnis Aminoplastvorkondensat / Summe Monomer und weitere thermoplastische Polymere vom Typ Polyetheracrylate, Polyurethanacrylate, Polysiloxanacrylate und/oder Polyester 50: 50 bis 95: 5, und das Verhältnis Radikalbildner/Monomer 0,05 : 99,95 bis 5 : 95 beträgt.

9. Verfahren zur Herstellung modifizierter Aminoplaste für die Verarbeitung zu Halbzeugen und Formstoffen verbesserter Elastizität nach einem oder mehreren der Ansprüche 5 bis 8, **dadurch gekennzeichnet, dass** als thermisch zerfallende Radikalbildner Peroxide bzw. Hydroperoxide von Melaminderivaten sowie Acylperoxide, Alkylperoxide, Hydroperoxide, Peroxycarbonate, Perester, Ketonperoxide, Peroxiketale und/ oder Azoverbindungen eingesetzt werden.

10. Verfahren zur Herstellung modifizierter Aminoplaste für die Verarbeitung zu Halbzeugen und Formstoffen verbesserter Elastizität nach einem oder mehreren der Ansprüche 5, 6 und 8, **dadurch gekennzeichnet, dass** in den Emulsionen als Emulgatoren 0,05 bis 3 Masse %, bezogen auf die Summe der Masse der Reaktanden, Copolymere aus C₄-C₂₀-ethylenisch ungesättigten Dicarbonsäureanhydriden und ethylenisch ungesättigten Monomeren mit einem Molverhältnis von 1 : 1 bis 1 : 9 und Molmassen-Gewichtsmitteln von 5000 bis 500000 eingesetzt werden, die mit Ammoniak, C₁-C₁₈-Monoalkylaminen, C₆-C₁₅-aromatischen Monoaminen, C₂-C₁₈-Monoaminoalkoholen, monoaminierten Poly(C₂-C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis Anhydridgruppen Copolymer / Ammoniak, Aminogruppen C₁-C₁₃-Monoalkylamine, C₆-C₁₈-aromatische Monoamine, C₂-C₁₃-Monoaminoalkohole und/oder monoaminiertes Poly-(C₂-C₄-alkylen)oxid und/oder Hydroxygruppen Poly(C₂-C₄alky-len)oxid 1 : 1 bis 20 : 1 beträgt.

11. Verwendung von modifizierten Aminoplasten nach Anspruch 1 bis 4 zur Herstellung von Pressteilen, Spritzgussteilen, Profilen, Mikrokapseln, Fasern, geschlossenzelligen oder offenzelligen Schaumstoffen, Beschichtungen, Laminaten, Schichtpressstoffen oder imprägnierten flächigen Trägermaterialien, bevorzugt Faserlaminaten oder imprägnierten Papier.

## Claims

1. Modified aminoplasts for the production of semifinished products and moulded materials having improved resilience, **characterized in that** the modified aminoplasts consist of
A) 50 to 95% by mass of aminoplast precondensates of the type consisting of melamine resins, urea resins, cyanamide resins, dicyandiamide resins, sulphonamide resins, guanamine resins and/or aniline resins having molar masses of 500 to 5000 and
B) 50 to 5% by mass of thermoplastic polymers having weight average molar masses of 2 × 10⁴ to 5 × 10⁷, which have been prepared by free radical polymerization of monomers of the type consisting of C₈-C₂₀-vinylaromatics, acrylic acid, methacrylic acid, acrylonitrile, C₄-C₂₁-acrylates, C₅-C₂₂-methacrylates, amino-C₁-C₈-alkyl (meth)acrylates, hydroxy-C₁-C₈-alkyl (meth)acrylates, C₄-C₁₀-fluoro(meth)acrylates, ethylenically unsaturated C₄-C₂₀-dicarboxylic anhydrides, C₃-C₂₀-vinyl esters, C₃-C₂₀-vinyl ethers, C₄-C₁₀-dienes, C₅-C₁₄-vinylsilanes, C₈-C₁₅-acrylatosilanes, vinylpyridine, vinyloxazoline, isopropenyloxazoline and/or vinylpyrrolidone in the presence of the aminoplast precondensates A),
or of A), B) and
C) further thermoplastic polymers of the type consisting of polyether acrylates, polyurethane acrylates, polysiloxane acrylates and/or polyesters having weight average molar masses of 1 × 10³ to 5 × 10⁷,
wherein the thermoplastic polymers are incorporated in the aminoplast precondensates in finely disperse form as particles having a mean particle diameter of 5 to 500 µm or form a homogeneous blend with the aminoplast precondensates.

2. Modified aminoplasts according to Claim 1, **characterized in that** the modified aminoplasts consist of 75 to 90% by mass of aminoplast precondensates and 25 to 10% by mass of thermoplastic polymers, and the thermoplastic polymers are optionally partially chemically linked to the aminoplast precondensates.

3. Modified aminoplasts according to Claim 1, **characterized in that** the melamine resins are polycondensates of melamine or melamine derivatives and C₁-C₁₀-aldehydes having a molar ratio of melamine or melamine derivative/C₁-C₁₀-aldehydes of 1:1 to 1:6 and the partial etherification products thereof with C₁-C₁₀-alcohols, the melamine derivatives preferably being melamines, diaminomethyltriazines and/or diaminophenyltriazines substituted by hydroxy-C₁-C₁₀-alkyl groups, hydroxy-C₁-C₄-alkyl(oxa-C₂-C₄-alkyl) groups and/or amino-C₁-C₁₂-alkyl groups, particularly preferably being 2-(2-hydroxyethylamino)-4,6-diamino-1,3,5-triazine, 2-(5-hydroxy-3-oxapentylamino)-4,6-diamino-1,3,5-triazine and/or 2,4,6-tri-(6-aminohexylamino)-1,3,5-triazine, ammeline, ammelide, melem, melon, melam, benzoguanamine, caprinoguanamine and/or butyroguanamine, and the C₁-C₁₀-aldehydes preferably being formaldehyde, acetaldehyde, trimethylolacetaldehyde, acrolein, furfurol, glyoxal and/or glutaraldehyde, particularly preferably formaldehyde.

4. Modified aminoplasts according to Claim 1, **characterized in that** the thermoplastic polymers are ethyl acrylate/hydroxyethyl methacrylate copolymers having a molar ethyl acrylate/hydroxyethyl methacrylate ratio of 80:20 to 95:5.

5. Process for the preparation of modified aminoplasts according to Claim 1, for processing to give semifinished products and moulded materials having improved resilience, **characterized in that** the modified aminoplasts are prepared by a one-stage liquid-phase process in which, in stirred reactors,
a) into solutions, emulsions or dispersions of aminoplast precondensates in water or in 80:20 to 40:60 water/C₁-C₈-alcohol mixtures having a solids content of 30 to 75% by mass,
b) monomers of the type consisting of C₈-C₂₀-vinyl-aromatics, acrylic acid, methacrylic acid, acrylonitrile, C₄-C₂₁-acrylates, C₅-C₂₂-methacrylates, amino-C₁-C₃-alkyl (meth)acrylates, hydroxy-C₁-C₃-alkyl (meth)acrylates, C₄-C₁₀-fluoro(meth)acrylates, ethylenically unsaturated C₄-C₂₀-dicarboxylic anhydrides, C₃-C₂₀-vinyl esters, C₃-C₂₀-vinyl ethers, C₄-C₁₀-dienes, C₅-C₁₄-vinylsilanes, C₆-C₁₅-acrylatosilanes, vinylpyridine, vinyloxazoline, isopropenyloxazoline and/or vinylpyrrolidone, and
c) thermally decomposing free radical formers having half-lives of 10 s to 50 min at temperatures of 50 to 95°C or free radical-forming redox systems
are metered or, into component a), the components b), c) and
d) solutions, dispersions or emulsions having a solids content of 15 to 70% by mass of further thermoplastic polymers of the type consisting of polyether acrylates, polyurethane acrylates, polysiloxane acrylates and/or polyesters having weight average molar masses of 1 × 10³ to 5 × 10⁷,
are metered, the ratio of aminoplast precondensate/monomer or the ratio of aminoplast precondensate/sum of monomers and further thermoplastic polymers of the type consisting of polyether acrylates, polyurethane acrylates, polysiloxane acrylates and/or polyesters being 50:50 to 95:5 and the ratio of free radical former/monomer being 0.02:99.98 to 5:95, and the reaction mixture is reacted at 10 to 150°C, with a residence time of 10 to 120 min and at a pressure of 1 to 12 bar, optionally subjected to devolatilization at 0.1 to 0.8 bar at 20 to 80°C and with a residence time of 10 to 50 min for separating off unreacted monomer fractions, and either cooled to room temperature for processing from solution or dried by spray drying.

6. Process for the preparation of modified aminoplasts according to Claim 1, for processing to give semifinished products and moulded materials having improved resilience, **characterized in that** the modified aminoplasts are prepared by a two-stage liquid-phase process in which, in the first process stage in stirred reactors, solutions, emulsions or dispersions of
a) polyfunctional C₁-C₃₀-amino compounds of the type consisting of melamine, melamine derivatives, urea, urea derivatives, guanidine, guanidine derivatives, cyanamide, dicyandiamide, sulphonamides and/or aniline and salts thereof,
b) C₁-C₁₀-aldehydes and
c) monomers of the type consisting of C₈-C₂₀-vinyl-aromatics, acrylic acid, methacrylic acid, acrylonitrile, C₄-C₂₁-acrylates, C₅-C₂₂-methacrylates, amino-C₁-C₃-alkyl (meth)acrylates, hydroxy-C₁-C₈-alkyl (meth) acrylates, C₄-C₁₀-fluoro(meth)acrylates, ethylenically unsaturated C₄-C₂₀-dicarboxylic anhydrides, C₃-C₂₀-vinyl esters, C₃-C₂₀-vinyl ethers, C₄-C₁₀-dienes, C₅-C₁₄-vinylsilanes, C₆-C₁₅-acrylatosilanes, vinylpyridine, vinyloxazoline, isopropenyloxazoline and/or vinylpyrrolidone,
or of the components a), b), c) and
d) further thermoplastic polymers of the type consisting of polyether acrylates, polyurethane acrylates, polysiloxane acrylates and/or polyesters having weight average molar masses of 1 × 10³ to 5 × 10⁷,
are reacted in water or in 80:20 to 40:60 water/C₁-C₃-alcohol mixtures, in a weakly alkaline medium at pH 8.2 to pH 9.5 and a reaction temperature of 50 to 95°C, with a residence time of 20 to 90 min and at a pressure of 1 to 8 bar, the ratio of polyfunctional C₁-C₃₀-amino compounds/C₁-C₁₀-aldehydes being 1:1 to 1:6, the ratio of the sum of C₁-C₃₀-amino compounds + C₁-C₁₀-aldehydes/monomer or the ratio of the sum of C₁-C₃₀-amino compounds + C₁-C₁₀-aldehydes/sum of monomer and further thermoplastic polymers of the type consisting of polyether acrylates, polyurethane acrylates, polysiloxane acrylates and/or polyesters being 50:50 to 95:5, and the content of C₁-C₃₀-amino compounds + C₁-C₁₀-aldehydes in the reaction medium water or water/C₁-C₈-alcohol mixtures being 30 to 75% by mass, and subsequently,
in the second process stage, after neutralization,
e) thermally decomposing free radical formers having half-lives of 10 s to 50 min in the temperature range of 50 to 95°C or free radical-forming redox systems
are metered into the solutions, emulsions or dispersions of the resulting aminoplast precondensates and monomers or monomers and thermoplastic polymers of the type consisting of polyether acrylates, polyurethane acrylates, polysiloxane acrylates and/or polyesters, the ratio of free-radical former/monomer being 0.05:99.95 to 5:95, and the reaction mixture is reacted at 10 to 120°C, with a residence time of 10 to 120 min and at a pressure of 1 to 12 bar, optionally subjected to devolatilization at 0.1 to 0.8 bar at 20 to 80°C and with a residence time of 10 to 50 min for separating off unreacted monomer fractions, and either cooled to room temperature for processing from solution or dried by spray drying.

7. Process for the preparation of modified aminoplasts according to Claim 1, for processing to give semifinished products and moulded materials having improved resilience, **characterized in that** the modified aminoplasts are prepared by a solid-phase modification process in which, in continuous mixers,
in the first process stage,
a) solid aminoplast precondensate resins which optionally
b) contain thermally decomposing free radical formers having half-lives of 10 s to 20 min at temperatures of 50 to 95°C
are subjected to a sorption of
c) monomers of the type consisting of C₈-C₂₀-vinyl-aromatics, acrylic acid, methacrylic acid, acrylonitrile, C₄-C₂₁-acrylates, C₅-C₂₂-methacrylates, amino-C₁-C₈-alkyl (meth)acrylates, hydroxy-C₁-C₈-alkyl (meth)acrylates, C₄-C₁₀-fluoro(meth)acrylates, ethylenically unsaturated C₄-C₂₀-dicarboxylic anhydrides, C₃-C₂₀-vinyl esters, C₃-C₂₀-vinyl ethers, C₄-C₁₀-dienes, C₅-C₁₄-vinylsilanes, C₆-C₁₅-acrylatosilanes, vinylpyridine, vinyloxazoline, isopropenyloxazoline and/or vinylpyrrolidone, and
d) optionally thermally decomposing free radical formers having half-lives of 10 s to 20 min at temperatures of 50 to 95°C
at a sorption temperature of 20 to 60°C and with a residence time of 3 min to 40 min, the ratio of aminoplast precondensate/monomer being 50:50 to 95:5 and the ratio of free radical former/monomer being 0.05:99.95 to 5:95,
in the second process stage, the reaction mixture which contains aminoplast precondensate, monomer and thermally decomposing free radical former is reacted at 50 to 120°C, with a residence time of 5 to 40 min and at a pressure of 1 to 12 bar, and is optionally subjected to devolatilization at 0.1 to 0.8 bar at 40 to 120°C and with a residence time of 5 to 40 min for separating off unreacted monomer fractions.

8. Process for the preparation of modified aminoplasts according to Claim 1, for processing to give semifinished products and moulded materials having improved resilience, **characterized in that** the modified aminoplasts are prepared by a melt modification process in which, in the continuous kneaders, mixtures of
a) solid aminoplast precondensate resins,
b) monomers of the type consisting of C₃-C₂₀-vinyl-aromatics, acrylic acid, methacrylic acid, acrylonitrile, C₄-C₂₁-acrylates, C₅-C₂₂-methacrylates, amino-C₁-C₅-alkyl (meth)acrylates, hydroxy-C₁-C₈-alkyl (meth)acrylates, C₄-C₁₀-fluoro(meth)acrylates, ethylenically unsaturated C₄-C₂₀-dicarboxylic anhydrides, C₃-C₂₀-vinyl esters, C₃-C₂₀-vinyl ethers, C₄-C₁₀-dienes, C₅-C₁₄-vinylsilanes, C₆-C₁₅-acrylatosilanes, vinylpyridine, vinyloxazoline, isopropenyloxazoline and/or vinylpyrrolidone, and
c) thermally decomposing free radical formers having half-lives of 20 s to 3 min at temperatures of 150 to 200°C,
or of the components a), b), c) and
d) solutions, dispersions or emulsions having a solids content of 15 to 70% by mass of polymers of the type consisting of polyether acrylates, polyurethane acrylates, polysiloxane acrylates and/or polyesters having weight average molar masses of 1 × 10³ to 5 × 10⁷, and
e) optionally 5 to 0% by mass, based on the aminoplast precondensates used, of C₂-C₈-alcohols,
are kneaded in molten form at temperatures of 170 to 220°C and with residence times of 2 to 12 min, devolatilized in vacuo, discharged and granulated or, with addition of customary curing agents, discharged through dies and shaped into semifinished products or moulded materials, the ratio of aminoplast precondensate/monomer or the ratio of aminoplast precondensate/sum of monomer and further thermoplastic polymers of the type consisting of polyether acrylates, polyurethane acrylates, polysiloxane acrylates and/or polyesters being 50:50 to 95:5 and the ratio of free radical former/monomer being 0.05:99.95 to 5:95.

9. Process for the preparation of modified aminoplasts for processing to give semifinished products and moulded materials having improved resilience according to one or more of Claims 5 to 8, **characterized in that** the thermally decomposing free radical formers used are peroxides or hydroperoxides of melamine derivatives and acyl peroxides, alkyl peroxides, hydroperoxides, peroxycarbonates, peresters, ketone peroxides, peroxyketals and/or azo compounds.

10. Process for the preparation of modified aminoplasts for processing to give semifinished products and moulded materials having improved resilience according to one or more of Claims 5, 6 and 8, **characterized in that** emulsifiers used in the emulsions comprise 0.05 to 3% by mass, based on the sum of the mass of the reactants, of copolymers of C₄-C₂₀-ethylenically unsaturated dicarboxylic anhydrides and ethylenically unsaturated monomers having a molar ratio of 1:1 to 1:9 and weight average molar masses of 5000 to 500 000, which have been reacted with ammonia, C₁-C₁₈-monoalkylamines, C₆-C₁₅-aromatic monoamines, C₂-C₁₈-monoaminoalcohols, monoaminated poly(C₂-C₄-alkylene) oxides having a molar mass of 400 to 3000 and/or monoetherified poly(C₂-C₄-alkylene) oxides having a molar mass of 100 to 10 000, the molar ratio of anhydride groups of copolymer/ammonia, amino groups of C₁-C₁₃-monoalkylamines, C₆-C₁₈-aromatic monoamines, C₂-C₁₃-monoaminoalcohols and/or monoaminated poly(C₂-C₄-alkylene) oxide and/or hydroxyl groups of poly(C₂-C₄-alkylene) oxide being 1:1 to 20:1.

11. Use of modified aminoplasts according to Claims 1 to 4 for the production of compression moulded parts, injection moulded parts, profiles, microcapsules, fibres, closed-cell or open-cell foams, coatings, laminates, composite materials or impregnated sheet-like substrate materials, preferably fibre laminates or impregnated paper.

## Revendications

1. Aminoplastes modifiés pour la production de produits semi-finis et de produits moulés présentant une élasticité améliorée, **caractérisés en ce que** les aminoplastes modifiés sont constitués par
A) 50 à 95% en masse de produits de précondensation d'aminoplastes du type résine de mélamine, d'urée, de cyanamide, de dicyanamide, de sulfonamide, de guanamine et/ou d'aniline présentant des masses molaires de 500 à 5000, et
B) 50 à 5% en masse de polymères thermoplastiques, présentant des masses molaires pondérales moyennes de 2 x 10⁴ à 5 x 10⁷, qui ont été préparés par polymérisation radicalaire de monomères de type vinylaromatique en C₈-C₂₀, acide acrylique, acide méthacrylique, acrylonitrile, ester en C₄-C₂₁ de l'acide acrylique, ester en C₅-C₂₂ de l'acide méthacrylique, (méth)acrylate d'amino-C₁-C₈-alkyle, (méth) acrylate d'hydroxy-C₁-C₈-alkyle, C₄-C₁₀-fluoro(méth)acrylate, anhydride d'acide C₄-C₂₀-dicarboxylique éthyléniquement insaturé, ester en C₃-C₂₀ de vinyle, C₃-C₂₀-vinyléther, C₄-C₁₀-diène, C₅-C₁₄-vinylsilane, C₆-C₁₅-acrylatsilane, vinylpyridine, vinyloxazoline, isopropényloxazoline et/ou vinylpyrrolidone en présence des produits de précondensation d'aminoplastes A),
ou par A), B) et
C) d'autres polymères thermoplastiques du type polyétheracrylate, polyuréthanacrylate, polysiloxanacrylate et/ou polyester présentant des masses molaires pondérales moyennes de 1 x 10³ à 5 x 10⁷,
les polymères thermoplastiques étant incorporés dans les produits de précondensation d'aminoplastes sous forme de particules finement dispersées présentant un diamètre de particule moyen de 5 à 500 µm ou formant un mélange homogène avec les produits de précondensation d'aminoplastes.

2. Aminoplastes modifiés selon la revendication 1, **caractérisés en ce que** les aminoplastes modifiés sont constitués par 75 à 90% en masse de produits de précondensation d'aminoplastes et par 25 à 10% en masse de polymères thermoplastiques et les polymères thermoplastiques étant le cas échéant partiellement liés chimiquement avec les produits de précondensation d'aminoplastes.

3. Aminoplastes modifiés selon la revendication 1, **caractérisés en ce que** les résines de mélamine sont des produits de polycondensation de mélamine ou de dérivés de mélamine et d'aldéhydes en C₁-C₁₀ avec un rapport molaire de mélamine ou dérivés de mélamine/aldéhydes en C₁-C₁₀ de 1:1 à 1:6 ainsi que leurs produits d'éthérification partielle avec des alcools en C₁-C₁₀, les dérivés de mélamine étant de préférence des mélamines, des diaminométhyltriazines et/ou des diaminophényltriazines substituées par des groupes hydroxy-C₁-C₁₀-alkyle, hydroxy-C₁-C₄-alkyl (oxa-C₂-C₄-alkyle) et/ou par des groupes amino-C₁-C₁₂-alkyle, de manière particulièrement préférée la 2-(2-hydroxyéthylamino)-4,6-diamino-1,3,5-triazine, la 2-(5-hydroxy-3-oxapentylamino)-4,6-diamino-1,3,5-triazine et/ou la 2,4,6-tris(6-aminohexylamino)-1,3,5-triazine, l'ammeline, l'ammelide, le melem, le melon, le melam, la benzoguanamine, l'acétoguanamine, la tétraméthoxyméthylbenzoguanamine, la caprinoguanamine et/ou la butyroguanamine, et les aldéhydes en C₁-C₁₀ étant de préférence le formaldéhyde, l'acétaldéhyde, le triméthylolacétaldéhyde, l'acroléine, le furfurol, le glyoxal et/ou le glutaraldéhyde, de manière particulièrement préférée le formaldéhyde.

4. Aminoplastes modifiés selon la revendication 1, **caractérisés en ce que** les polymères thermoplastiques sont des copolymères d'acrylate d'éthyle-méthacrylate d'hydroxyéthyle présentant un rapport molaire acrylate d'éthyle/méthacrylate d'hydroxyéthyle de 80:20 à 95:5.

5. Procédé pour la production d'aminoplastes modifiés selon la revendication 1 pour la transformation en produits semi-finis et en substances moulées présentant une élasticité améliorée, **caractérisé en ce que** les aminoplastes modifiés sont produits selon un procédé en phase liquide en une étape, dans lequel, dans des réacteurs agités, on dose
a) dans des solutions, des émulsions ou des dispersions de produits de précondensation d'aminoplastes dans l'eau ou dans des mélanges eau-alcool en C₁-C₈ 80:20 à 40:60 présentant une teneur en solides de 30 à 75% en masse,
b) des monomères du type vinylaromatique en C₈-C₂₀, acide acrylique, acide méthacrylique, acrylonitrile, ester en C₄-C₂₁ d'acide acrylique, ester en C₅-C₂₂ de l'acide méthacrylique, méthacrylate d'amino-C₁-C₃-alkyle, (méth) acrylate d' hydroxy-C₁-C₃-alkyle, C₄-C₁₀-fluoro(méth)acrylate, anhydride d'acide C₄-C₂₀-dicarboxylique éthyléniquement insaturé, ester en C₃-C₂₀ de vinyle, C₃-C₂₀-vinyléther, C₄-C₁₀-diène, C₅-C₁₄-vinylsilane, C₆-C₁₅-acrylatsilane, vinylpyridine, vinyloxazoline, isopropényloxazoline et/ou vinylpyrrolidone, et
c) des agents de formation de radicaux à décomposition thermique présentant des durées de demi-vie de 10 s à 50 min à des températures de 50 à 95°C ou des systèmes redox formant des radicaux,
ou dans les composants a) on dose les composants b), c) et
d) des solutions, des dispersions ou des émulsions présentant une teneur en solides de 15 à 70% en masse d'autres polymères thermoplastiques du type polyétheracrylate, polyuréthanacrylate, polysiloxanacrylate et/ou polyester présentant des masses molaires pondérales moyennes de 1 x 10³ à 5 x 10⁷,
où le rapport produit de précondensation d'aminoplastes/monomère ou le rapport produit de précondensation d'aminoplastes/somme des monomères et des autres polymères thermoplastiques du type polyétheracrylate, polyuréthanacrylate, polysiloxanacrylate et/ou polyester est de 50:50 à 95:5 et le rapport agent de formation de radicaux/monomère est de 0,02:99,98 à 5:95, et on transforme le mélange réactionnel à 10 jusqu'à 150°C, pendant une durée de séjour de 10 à 120 min et à une pression de 1 à 12 bars, on le soumet le cas échéant, pour la séparation de proportions de monomères qui ne sont pas transformées, à un dégazage à 0,1 jusqu'à 0,8 bar à 20 jusqu'à 80°C et pendant une durée de séjour de 10 à 50 min, et pour la transformation, on le refroidit à partir de la solution à température ambiante ou on sèche par séchage par pulvérisation.

6. Procédé pour la production d'aminoplastes modifiés selon la revendication 1 pour la transformation en produits semi-finis et en substances moulées présentant une élasticité améliorée, **caractérisé en ce que** les aminoplastes modifiés sont produits selon un procédé en phase liquide à deux étapes, dans lequel, dans la première étape de procédé, on transforme, dans des réacteurs agités, des solutions, des émulsions ou des dispersions
a) de composés amino en C₁-C₃₀ polyfonctionnels du type mélamine, dérivés de mélamine, urée, dérivés d'urée, guanidine, dérivés de guanidine, cyanamide, dicyandiamide, sulfonamide et/ou aniline ainsi que leurs sels,
b) d'aldéhydes en C₁-C₁₀, et
c) de monomères du type vinylaromatique en C₈-C₂₀, acide acrylique, acide méthacrylique, acrylonitrile, ester en C₄-C₂₁ d'acide acrylique, ester en C₅-C₂₂ de l'acide méthacrylique, méthacrylate d'amino-C₁-C₃-alkyle, (méth)acrylate d'hydroxy-C₁-C₈-alkyle, C₄-C₁₀-fluoro(méth)acrylate, anhydride d'acide C₄-C₂₀-dicarboxylique éthyléniquement insaturé, ester en C₃-C₂₀ de vinyle, C₃-C₂₀-vinyléther, C₄-C₁₀-diène, C₅-C₁₄-vinylsilane, C₆-C₁₅-acrylatsilane, vinylpyridine, vinyloxazoline, isopropényloxazoline et/ou vinylpyrrolidone,
ou des composants a), b), c) et
d) d'autres polymères thermoplastiques du type polyétheracrylate, polyuréthanacrylate, polysiloxanacrylate et/ou polyester présentant des masses molaires pondérales moyennes de 1 x 10³ à 5 x 10⁷,
dans de l'eau ou dans des mélanges eau-alcool en C₁-C₃ 80:20 à 40:60, dans un milieu faiblement alcalin à pH 8,2 à pH 9,5, à une température de réaction de 50 à 95°C, un temps de séjour de 20 à 90 min et à une pression de 1 à 8 bars, le rapport des composés polyfonctionnels amino en C₁-C₃₀/aldéhydes en C₁-C₁₀ étant de 1:1 à 1:6, le rapport de la somme des composés amino en C₁-C₃₀ + aldéhydes en C₁-C₁₀/monomère ou le rapport de la somme des composés amino en C₁-C₃₀ + aldéhydes en C₁-C₁₀/somme des monomères et des autres polymères thermoplastiques du type polyétheracrylate, polyuréthanacrylate, polysiloxanacrylate et/ou polyester étant de 50:50 à 95:5, et la teneur en composés amino en C₁-C₃₀ + aldéhyde en C₁-C₁₀ dans le mélange réactionnel formé d'eau ou de mélanges eau-alcool en C₁-C₈ étant de 30 à 75% en masse, puis
dans la deuxième étape de procédé, après neutralisation, on dose dans les solutions, émulsions ou dispersions des produits de précondensation d'aminoplaste formés et des monomères ou des monomères et des polymères thermoplastiques du type polyétheracrylate, polyuréthanacrylate, polysiloxanacrylate et/ou polyester,
e) des agents de formation de radicaux à décomposition thermique présentant des durées de demi-vie de 10 s à 50 min dans une plage de température de 50 à 95°C ou des systèmes redox formant des radicaux,
le rapport agent de formation de radicaux/monomère étant de 0,05:99,95 à 5:95, et on transforme le mélange réactionnel à 10 jusqu'à 120°C, un temps de séjour de 10 à 120 min et une pression de 1 à 12 bars, on le soumet le cas échéant, pour la séparation de proportions de monomères non transformées, à un dégazage à 0,1 jusqu'à 0,8 bar à 20 jusqu'à 80°C et un temps de séjour de 10 à 50 min et, pour la transformation à partir de la solution, on le refroidit à température ambiante ou on sèche par séchage par pulvérisation.

7. Procédé pour la production d'aminoplastes modifiés selon la revendication 1 pour la transformation en produits semi-finis et en substances moulées présentant une élasticité améliorée, **caractérisé en ce que** les aminoplastes modifiés sont produits selon un procédé de modification en phase solide, dans lequel, dans des mélangeurs continus, dans la première étape de procédé, on soumet
a) des résines solides de produits de précondensation d'aminoplastes, qui contiennent le cas échéant
b) des agents de formation de radicaux à décomposition thermique présentant des durées de demi-vie de 10 s à 20 min à des températures de 50 à 95°C, à une absorption
c) de monomères du type vinylaromatique en C₈-C₂₀, acide acrylique, acide méthacrylique, acrylonitrile, ester en C₄-C₂₁ d'acide acrylique, ester en C₅-C₂₂ de l'acide méthacrylique, (méth)acrylate d'amino-C₁-C₈-alkyle, (méth)acrylate d' hydroxy-C₁-C₈-alkyle, C₄-C₁₀-fluoro(méth)acrylate, anhydride d'acide C₄-C₂₀-dicarboxylique éthyléniquement insaturé, ester en C₃-C₂₀ de vinyle, C₃-C₂₀-vinyléther, C₄-C₁₀-diène, C₅-C₁₄-vinylsilane, C₆-C₁₅-acrylatsilane, vinylpyridine, vinyloxazoline, isopropényloxazoline et/ou vinylpyrrolidone,
d) le cas échéant d'agents de formation de radicaux à décomposition thermique présentant des durées de demi-vie de 10 s à 20 min à des températures de 50 à 95°C,
à une température de sorption de 20 à 60°C et un temps de séjour de 3 min à 40 min, le rapport produit de précondensation d'aminoplastes/monomère étant de 50:50 à 95:5 et le rapport agent de formation de radicaux/monomère étant de 0,05:99,95 à 5:95,
dans une deuxième étape de procédé, on soumet le mélange réactionnel, qui contient le produit de précondensation d'aminoplaste, le monomère et les agents de formation de radicaux à décomposition thermique, à 50 jusqu'à 120°C, un temps de séjour de 5 à 40 min et une pression de 1 à 12 bars, on le soumet le cas échéant, pour la séparation de proportions de monomères non transformées, à un dégazage à 0,1 jusqu'à 0,8 bar à 40 jusqu'à 120°C et un temps de séjour de 5 à 40 min.

8. Procédé pour la production d'aminoplastes modifiés selon la revendication 1 pour la transformation en produits semi-finis et en substances moulées présentant une élasticité améliorée, **caractérisé en ce que** les aminoplastes modifiés sont produits selon un procédé de modification en masse fondue, dans lequel, dans des malaxeurs continus, des mélanges
a) de résines solides de produits de précondensation d'aminoplastes,
b) de monomères du type vinylaromatique en C₃-C₂₀, acide acrylique, acide méthacrylique, acrylonitrile, ester en C₄-C₂₁ d'acide acrylique, ester en C₅-C₂₂ de l'acide méthacrylique, (méth)acrylate d'amino-C₁-C₅-alkyle, (méth)acrylate d'hydroxy-C₁-C₈-alkyle, C₄-C₁₀-fluoro(méth)acrylate, anhydride d'acide C₄-C₂₀-dicarboxylique éthyléniquement insaturé, ester en C₃-C₂₀ de vinyle, C₃-C₂₀-vinyléther, C₄-C₁₀-diène, C₅-C₁₄-vinylsilane, C₆-C₁₅-acrylatsilane, vinylpyridine, vinyloxazoline, isopropényloxazoline et/ou vinylpyrrolidone, et
c) des agents de formation de radicaux à décomposition thermique présentant des durées de demi-vie de 20 s à 3 min à des températures de 150 à 200°C,
ou des mélanges des composants a), b), c) et
d) des solutions, des dispersions ou des émulsions présentant une teneur en solides de 15 à 70% en masse de polymères thermoplastiques du type polyétheracrylate, polyuréthanacrylate, polysiloxanacrylate et/ou polyester présentant des masses molaires pondérales moyennes de 1 x 10³ à 5 x 10⁷, et
e) le cas échéant 5 à 0% en masse, par rapport aux produits de précondensation d'aminoplastes, d'alcools en C₂-C₈,
sont malaxés en masse fondue à des températures de 170 à 220°C et des temps de séjour de 2 à 12 min, dégazés sous vide, évacués et granulés ou, avec addition de durcisseurs usuels, évacués par des outils de moulage et façonnés en produits semi-finis ou substances moulées, le rapport produit de précondensation d'aminoplaste/monomère ou le rapport produit de précondensation d'aminoplaste/somme des monomères et d'autres polymères thermoplastiques du type polyétheracrylate, polyuréthanacrylate, polysiloxanacrylate et/ou polyester étant de 50:50 à 95:5, et le rapport agent de formation de radicaux/monomère étant de 0,05:99,95 à 5:95.

9. Procédé pour la production d'aminoplastes modifiés pour la transformation en produits semi-finis et en substances moulées présentant une élasticité améliorée, selon l'une ou plusieurs des revendications 5 à 8, **caractérisé en ce qu'**on utilise comme agents de formation de radicaux à décomposition thermique des peroxydes ou des hydroperoxydes de dérivés de mélamine ainsi que des acylperoxydes, des alkylperoxydes, des hydroperoxydes, des peroxycarbonates, des peresters, des cétoneperoxydes, des peroxycétals et/ ou des composés azo.

10. Procédé pour la production d'aminoplastes modifiés pour la transformation en produits semi-finis et en substances moulées présentant une élasticité améliorée, selon l'une ou plusieurs des revendications 5, 6 et 8, **caractérisé en ce qu'**on utilise, dans les émulsions, comme émulsifiants, 0,05 à 3% en masse, par rapport à la somme de la masse des réactifs, des copolymères d'anhydrides d'acides carboxyliques en C₄-C₂₀ éthyléniquement insaturés et des monomères éthyléniquement insaturés avec un rapport molaire de 1:1 à 1:9 et des masses molaires pondérales moyennes de 5000 à 500 000, qui ont été transformés avec de l'ammoniaque, des mono-C₁-C₁₈-alkylamines, des monoamines aromatiques en C₆-C₁₅, des monoaminoalcools en C₂-C₁₈, des poly (oxydes d'alkylène en C₂-C₄) monoaminés présentant une masse molaire de 400 à 3000, et/ou des poly(oxydes d'alkylène en C₂-C₄) monoéthérés, présentant une masse molaire de 100 à 10 000, le rapport groupes anhydride du copolymère/ammoniaque, groupes amino de mono-C₁-C₁₃-alkylamine, de monoamine aromatique en C₆-C₁₈, de monoaminoalcool en C₂-C₁₃ et/ou de poly(oxyde d'alkylène en C₂-C₄) monoaminé et/ou groupes hydroxy de poly(oxyde d'alkylène en C₂-C₄) étant de 1:1 à 20:1.

11. Utilisation des aminoplastes modifiés selon la revendication 1 à 4 pour la production de pièces pressées, de pièces moulées par injection, de profilés, de microcapsules, de fibres, de mousses à pores fermés ou ouverts, de revêtements, de laminés, de matériaux pressés à couches ou de matériaux support plat imprégnés, de préférence de laminés fibreux ou de papier imprégné.
